(19) Europäisches Patentamt
European Patent Office
Office européen des brevets

(11) **EP 1 827 663 B1**

(12) **EUROPEAN PATENT SPECIFICATION**

(45) Date of publication and mention
of the grant of the patent:
**12.08.2015 Bulletin 2015/33**

(51) Int Cl.:
*B01D 71/02* *(2006.01)*    *C01B 13/02* *(2006.01)*
*B01D 53/22* *(2006.01)*

(21) Application number: **05813697.9**

(22) Date of filing: **06.12.2005**

(86) International application number:
**PCT/EP2005/056542**

(87) International publication number:
**WO 2006/061390 (15.06.2006 Gazette 2006/24)**

(54) **CATALYTIC MEMBRANE REACTOR**

KATALYTISCHER MEMBRAN-REAKTOR

REACTEUR A MEMBRANE CATALYTIQUE

(84) Designated Contracting States:
**AT BE BG CH CY CZ DE DK EE ES FI FR GB GR
HU IE IS IT LI LT LU LV MC NL PL PT RO SE SI
SK TR**

(30) Priority: **10.12.2004 FR 0452914**

(43) Date of publication of application:
**05.09.2007 Bulletin 2007/36**

(73) Proprietor: **L'AIR LIQUIDE, Société Anonyme pour
l'Etude
et l'Exploitation des Procédés Georges Claude
75321 Paris Cedex 07 (FR)**

(72) Inventors:
• **CHARTIER, Thierry
F-87220 Feytiat (FR)**
• **DEL GALLO, Pascal
F-91410 Dourdan (FR)**
• **ETCHEGOYEN, Grégory
F-87570 Rilhac-Rancon (FR)**

(74) Representative: **Conan, Philippe Claude et al
L'Air Liquide SA
Direction de la Propriété Intellectuelle
75, quai d'Orsay
75321 Paris Cedex 07 (FR)**

(56) References cited:
EP-A- 1 452 505       US-A1- 2002 106 495
US-A1- 2004 183 055   US-B1- 6 368 383

**Description**

The subject of the invention is a novel catalytic membrane reactor for carrying out electrochemical reactions in the solid state.

A catalytic membrane reactor or CMR for carrying out electrochemical reactions in the solid state must have, in its entirety, the following properties:

- it must be capable of catalyzing the chemical reaction for which it has been designed;
- it must exhibit ionic, electronic or hybrid conduction properties so as to allow the electrochemical transformations required by the reaction in question; and
- it must be stable under6 the operating conditions employed.

In the case of a CMR intended for the reaction of reforming methane into synthesis gas, the main chemical reaction called catalytic partial oxidation or CPO is:

$$CH_4 + \tfrac{1}{2}\,O_2 \rightarrow 2\,H_2 + CO,$$

optionally with the intervention of water molecules joining the reducing flow (natural gas) in respect of the steam methane reforming or SMR side reaction. These reactions - main reaction and side reaction - take place at temperatures of between 600°C and 1100°C, preferably between 650°C and 1000°C, and at pressures between atmospheric pressure and 40 bar ($40 \times 10^5$ Pa), preferably between 10 bar ($10^4$ Pa) and 35 bar ($35 \times 10^5$ Pa).

The CMR generally consists of at least:

(i) a porous support that provides the system with mechanical integrity;
(ii) a dense membrane (M) called the active membrane, which is supported by the said porous support and is a hybrid electron/$O^{2-}$ anion hybrid conductor; and
(iii) a catalytic phase (C) taking the form either of a porous layer deposited on the surface of the dense membrane, or of catalysts in various geometrical forms, such as rods or spheres that are positioned between the ceramic membranes, or a combination of the two.

In such a reactor, the thick porous support must provide the complete system with sufficient mechanical integrity, must support the dense membrane and must allow gaseous molecular diffusion of the air up to the surface of the membrane and possibly ensure that the oxygen of the air is dissociated into various ionic and/or radical species ($O^{2-}$, Oads, $O^{\cdot}$, $O^-$, $O_2^-$, $O_2^{2-}$, etc.); the thin dense membrane must be completely impermeable to any gaseous diffusion, must allow, under certain temperature, gaseous atmosphere and partial pressure conditions, the ionic diffusion of oxide species, must be stable in oxidizing medium and in reducing medium (reforming catalyst side) and must possibly exhibit properties on the surface whereby oxygen is reduced to $O^{2-}$ ions and/or $O^{2-}$ ions are oxidized to molecular oxygen; the reforming catalyst (thin porous layer) must accelerate the catalytic natural-gas reforming reaction and possibly promote the recombination of the ionic and/or radical species ($O^{2-}$, $O_{ads}$, $O^{\cdot}$, $O^-$, $O_2^-$, $O_2^{2-}$, etc.) into molecular oxygen ($O_2$).

CMRs produced from ceramic materials allow the separation of oxygen from air, by diffusion of this oxygen in ionic form through the dense ceramic material, and the chemical reaction of the oxygen and/or of species of the $O^{2-}$, $O_{ads}$, $O^{\cdot}$, $O^-$, $O_2^-$ or $O_2^{2-}$ type with natural gas, mainly methane, on the catalytic surface sites of the membrane. The conversion of synthesis gas to a liquid fuel by the GTL (Gas To Liquid) process requires a molar ratio of the reactants, $H_2/CO$ of 2. Now, this ratio of 2 may be obtained directly by a process employing a CMR.

The most promising family of materials for use in a CMR is that of oxides having a crystallographic structure derived from perovskite. Perovskite is a mineral of formula $CaTiO_3$ having a crystal structure in which the unit cell is a cube whose vertices are occupied by the $Ca^{2+}$ cations, its centre by the $Ti^{4+}$ cation and the centre of its faces by the $O^{2-}$ oxygen anions. Such a structure is confirmed by X-ray diffraction (XRD). By extension, the term "perovskite" or "perovskite-type compound" applies to any compounds of general formula $ABO_3$, in which A and B represent metal cations, the sum of the charges of which is equal to +6 and the crystal unit cell of which has the structure described above.

Teraoka was the first to demonstrate the mixed conduction properties of certain perovskite materials such as those of formula: $La_{1-x}Sr_xCo_{1-y}Fe_yO_{3-\delta}$, i.e. the conduction of electrons (electronic conductivity: $\sigma_{e^-}$) and the conduction of oxygen ions (ionic conductivity: $\sigma_{o^{2-}}$) [Teraoka et al.; Mat. Res. Bull., 23, (1988) 51-58]. This mixed conduction of a compound of formula $A_{1-x}A'_xB_{1-y}B'_yO_{3-\delta}$, is attributed to the substitution of the trivalent element A by a bivalent element A', favoring an oxygen deficit in the material, and by the ability of element B or B' to change valence state.

Gellings and Bouwmeester have demonstrated that dense membranes of perovskite structure are semi-permeable to oxygen when they are subjected to an oxygen partial pressure difference at temperatures above 700°C. These operating conditions (temperature, atmosphere, pressure) are those of the CPO (catalytic partial oxidation) reaction.

These membranes can therefore be used as CMRs [Gellings and Bouwmeester ; Catal. Today, 12 (1992) 1-105].

United States Patents US 6 214 757, US 5 911 860, US 6 165 431 and US 5 648 304 disclose materials of perovskite or brown-millerite structure exhibiting mixed conduction, and also their use as catalytic membrane reactor.

To hope to achieve an industrial level of synthesis gas production, the catalytic reactors must be highly permeable to oxygen. Now, the oxygen flux through a membrane is inversely proportional to the thickness of the membrane. It is therefore necessary to minimize the thickness of this dense membrane, typically down to below 300 $\mu$m and preferably below 200 $\mu$m.

Apart from its mechanical role, the porous support of the CMR may also be "active", that is to say it may have mixed conduction properties that improve the kinetics for surface exchange between gaseous oxygen and ionic oxygen and therefore improve the oxygen flux through the membrane. In this case, the porous support fulfils not only a mechanical function but also a catalytic function of reducing the oxygen in the air to oxide ions ($O^{2-}$).

The architecture of CMR, which is defined by the arrangement and the thickness of the various (catalytic, dense and porous) layers, their microstructure, the distribution of pores and the grain size, also has an influence on the oxygen flux. The architecture/microstructure of the CMR also has an influence on the stability of the system under operating conditions. The term "stability" is understood to refer to the thermomechanical properties, creep and degradation phenomena, especially such as interfacial debonding.

United States Patents US 4 791 079 and US 4 827 071 disclose the notion of a CMR comprising a porous support having a catalytic activity associated with a dense membrane.

United States Patent US 5 240 480 discloses several architectures of mixed conductor multilayers, comprising a dense layer associated with a porous layer, the pores of which do not exceed 10 $\mu$m in size, the two layers being active, that is to say they are composed of oxides having mixed conduction properties, it being possible for the porous layer to have a discrete or continuous porosity gradient. A non-active porous support layer may be affixed to the active porous layer. United States Patent US 6 368 383 discloses one particular architecture of the membrane, in that it comprises a dense layer, at lease one adjacent active porous layer and at least one non-active porous support layer. That invention demonstrates the influence of the thickness and the microstructure of the active porous layer by defining an optimum pore size/porous layer thickness pair for the oxygen flux through this type of membrane. The document EP 1452505A1 discloses one particular architecture of the membrane, in that it comprises a porous support, a porous catalytic layer, a dense layer, an intermediate layer and a porous catalytic layer. United States patents disclose processes for producing a dense/porous bilayer, whether by plasma deposition as in US 5 391 440 and US 6 638 575, by CVD deposition, as in US 5 439 706, or by immersion of a porous body in a suspension of ceramic particles, as in US 5 683 797. In addition to having a high oxygen flux, the CMR must guarantee (i) an $H_2$/CO ratio of the order of 2 and (ii) the selectivity of CO relative to $CO_2$ (a product resulting from the complete combustion of natural gas with oxygen) coming from the CPO reaction. Certain catalysts are capable of favoring the partial oxidation reaction over other reactions (mainly complete combustion) - these are especially the following metals: platinum, palladium, gold, silver, rhodium and nickel, and also their respective oxides or mixtures of their respective oxides. The CMR may thus have a layer of a catalytic material deposited directly on the dense layer or deposited on an intermediate porous layer between the CPO catalyst and the dense membrane. Various CMR architectures have thus been disclosed in United States Patents US 5 534 471 and US 5 569 633. The membranes described in those patents comprise a dense mixed conductor layer surrounded, on the one hand, by a porous support and, on the other hand, by a catalytic material, or a porous mixed conductor layer surrounded, on the one hand, by a catalytic layer and, on the other hand, by a dense layer and then, possibly, by a porous support. The porous supports may also be active (acting as oxygen reduction catalyst) but they are not necessarily of perovskite structure. The catalyst is preferably a metal or a metal oxide deposited on the adjacent layer. Other CMR architectures have been described in United States Patent US 5 938 822, which comprise one or more thin porous layers deposited on one or more faces of the dense membrane in order to improve the surface reaction kinetics. The dense layer may be a composite produced from a mixed conductor material and from another material that improves the mechanical and catalytic properties or the sintering behavior of the matrix. The porous material deposited is the same as that of the matrix. This particular architecture may be supplemented with a porous support layer of indeterminate nature for improving the structural stability of the multilayer.

United States Patent US 6 514 314 discloses a specific choice of materials that characterize the porous support, having ionic conductivity properties and mixed conductivity properties. Again this has an architecture consisting of a thin dense layer deposited on a porous support with a discrete porosity gradient.

United States Patent US 6 565 632 discloses a tubular overall structure, comprising the inside of the CMR tube, characterized by: (i) an external catalytic porous layer; (ii) a thin dense membrane; and (iii) a ceramic porous "stake" or porous support (skeleton).

This is why the inventors of the present patent application have sought to develop one particular architecture of the CMR that can be defined as being a multilayer membrane with property gradient, most of the constituent materials of the various layers of which have a perovskite-type crystallographic structure. This particular CMR will be characterized from a chemical standpoint by the chemical continuity of the ceramic compounds constituting each layer; the term "chemical continuity" is understood to mean the presence of at least two identical cations in the formulation of the compounds of directly successive layers. The reactor, as has just been defined, will be called a PCMR (Perovskite Catalytic Membrane Reactor).

The subject of the present invention is therefore an organized assembly based on superposed layers of materials of similar chemical nature, characterized in that it comprises:

**(a) - a dense layer ($C_{D1}$)**, with a thickness $E_{D1}$, the porosity of which does not exceed 5% by volume, the said dense layer ($C_{D1}$) consisting of a material ($A_{D1}$) comprising, for 100% of its volume:

(i) - at least 75% by volume and at most 100% by volume of a compound ($C_1$) chosen from doped ceramic oxides which, at the use temperature of between 600°C and 1100°C, are in the form of a crystal lattice with oxide ion vacancies of perovskite phase, of formulae:

$$La_{1-x-u}Sr_xAl_uFe_{1-y}Ti_yO_{3-w}, \quad La_{1-x-u}Sr_xCa_uFe_{1-y}Ti_yO_{3-w}, \quad La_{1-x-u}Sr_xBa_uFe_{1-y}Ti_yO_{3-w},$$

$La_{1-x-u}Sr_xAl_uFe_{1-y}Ga_vO_{3-w}$, $La_{1-x-u}Sr_xCa_uFe_{1-y}Ga_yO_{3-w}$, $La_{1-x-u}Sr_xBa_uFe_{1-y}Ga_yO_{3-w}$, $La_{1-x}Sr_xFe_{1-y}Ti_yO_{3-w}$, $La_{1-x}Sr_xFe_{1-y}Ga_vO_{3-w}$, $La_{1-x-u}Sr_xCa_uFeO_{3-w}$, $La_{1-u}Ca_uFeO_{3-w}$ or $La_{1-x}Sr_xFeO_{3-w}$,

in which

- $0 < x \leq 0.5$;
- $0 < u \leq 0.5$;
- $(x + u) \leq 0.5$;
- $0 \leq y \leq 0.9$; and
- w is such that the structure in question is electrically neutral;

and more particularly those of formulae:

$$La_{0.6} \quad Sr_{0.4}Fe_{0.9} \quad Ga_{0.1} \quad O_{3-w}, \quad La_{0.7}Sr_{0.3}Fe_{0.9}Ga_{0.1}O_{3-w}, \quad La_{0.8}Sr_{0.2}Fe_{0.7}Ga_{0.3}O_{3-w},$$

$La_{0.7}Sr_{0.3}Fe_{0.7}Ga_{0.3}O_{3-w}$ or $La_{0.5} \; Sr_{0.5} \; Fe_{0.9} \; Ti_{0.1} \; O_{3-w}$.

(ii) - optionally up to 25% by volume of a compound ($C_2$), which differs from compound ($C_1$), chosen from magnesium oxide (MgO), calcium oxide (CaO), aluminum oxide ($Al_2O_3$), zirconium oxide ($ZrO_2$), titanium oxide ($TiO_2$), strontium-aluminum mixed oxides $SrAl_2O_4$ or $Sr_3Al_2O_6$, barium-titanium mixed oxide ($BaTiO_3$), calcium-titanium mixed oxide ($CaTiO_3$), $La_{0.5}Sr_{0.5}Fe_{0.9}Ti_{0.1}O_{3-\omega}$, or $La_{0.6}Sr_{0.4}Fe_{0.9}Ga_{0.1}O_{3-\omega}$; and

(iii) - optionally up to 2.5% by volume of a compound ($C_{1-2}$) produced from at least one chemical reaction represented by the equation:

$$xF_{C1} + yF_{C2} \rightarrow zF_{C1-2},$$

in which equation $F_{C1}$, $F_{C2}$ and $F_{C1-2}$ represent the respective raw formulae of compounds ($C_1$), ($C_2$) and ($C_{1-2}$) and x, y and z represent rational numbers greater than or equal to 0;

**(b) - a porous layer ($C_{P1}$)**, with a thickness of $E_{P1}$, the volume porosity of which is between 20% and 80%, adjacent to the said dense layer ($C_{D1}$), the said porous layer ($C_{P1}$) consisting of a material ($A_{P1}$) comprising, per 100% of its volume:

(i) - at least 75% by volume and at most 100% by volume of a compound ($C_3$) chosen from doped ceramic oxides which, at the use temperature of between 600°C and 1100°C, are in the form of a crystal lattice having oxide ion vacancies of perovskite phase, of formulae:

$$La_{1-x}Sr_xFe_{1-y}Ga_yO_{3-w}, \quad La_{1-x}Sr_xFe_{1-y}Ti_yO_{3-w}, \quad La_{1-x}Sr_xFeO_{3-w}, \quad La_{1-u}Ca_uFe_{1-y}Ga_yO_{3-w},$$

$La_{1-u}Ca_uFe_{1-y}Ti_yO_{3-w}$, $La_{1-u}Ca_uFeO_{3-w}$, $La_{1-u}Ba_uFe_{1-y}Ga_yO_{3-w}$, $La_{1-u}Ba_uFe_{1-y}Ti_yO_{3-w}$, $La_{1-u}Ba_uFeO_{3-w}$, $La_{1-x-u}Sr_xAl_uFe_{1-y}Ti_yO_{3-w}$, $La_{1-x-u}Sr_xCa_uFe_{1-y}Ti_yO_{3-w}$, $La_{1-x-u}Sr_xBa_uFe_{1-y}Ti_yO_{3-w}$, $La_{1-x-u}Sr_xAl_uFe_{1-y}Ga_yO_{3-w}$, $La_{1-x-u}Sr_xCa_uFe_{1-y}Ga_yO_{3-w}$, $La_{1-x-u}Sr_xBa_uFe_{1-y}Ga_yO_{3-w}$, $La_{1-x}Sr_xFe_{1-y}Ti_yO_{3-w}$, $La_{1-x}Sr_xFe_{1-y}Al_yO_{3-w}$, $La_{1-u}Ca_uFe_{1-y}Ti_yO_{3-w}$, $La_{1-u}Ba_uFe_{1-y}Ti_yO_{3-w}$, $La_{1-x}Sr_xFe_{1-y}Ga_yO_{3-w}$, $La_{1-u}Ca_uFe_{1-y}Ga_yO_{3-w}$, $La_{1-u}Ba_uFe_{1-y}Ga_yO_{3-w}$, $La_{1-u}Ba_uFeO_{3-w}$, $La_{1-u}Ca_uFeO_{3-w}$ or $La_{1-x}Sr_xFeO_{3-w}$,

in which:

- $-0 < x \leq 0.5$;
- $0 < u \leq 0.5$;
- $(x + u) \leq 0.5$;
- $0 \leq y \leq 0.9$; and
- w is such that the structure in question is electrically neutral;

and more particularly those of formulae:

$La_{0.6}Sr_{0.4}Fe_{0.9}Ga_{0.1}O_{3-w}$, $La_{0.9}Sr_{0.1}Fe_{0.9}Ga_{0.1}O_{3-w}$, $La_{0.7}Sr_{0.3}Fe_{0.7}Al_{0.3}O_{3-w}$, $La_{0.7}Sr_{0.3}Fe_{0.9}Ga_{0.1}O_{3-w}$, $La_{0.8}Sr_{0.2}Fe_{0.7}Ga_{0.3}O_{3-w}$, $La_{0.7}Sr_{0.3}Fe_{0.7}Ga_{0.3}O_{3-w}$, $La_{0.5}Sr_{0.5}Fe_{0.9}Ti_{0.1}O_{3-w}$, $La_{0.9}Sr_{0.1}Fe_{0.9}Ti_{0.1}O_{3-w}$, $La_{0.6}Sr_{0.4}Fe_{0.2}Co_{0.8}O_{3-w}$, $La_{0.7}Sr_{0.3}FeO_{3-w}$ or $La_{0.9}Sr_{0.1}Fe_{0.2}Co_{0.8}O_{3-w}$;

(ii) - optionally up to 25% by volume of a compound $(C_4)$, which differs from compound $(C_3)$, chosen from magnesium oxide (MgO), calcium oxide (CaO), aluminum oxide $(Al_2O_3)$, zirconium oxide $(ZrO_2)$, titanium oxide $(TiO_2)$, strontium-aluminum mixed oxides $SrAl_2O_4$ or $Sr_3Al_2O_6$, barium-titanium mixed oxide $(BaTiO_3)$, calcium-titanium mixed oxide $(CaTiO_3)$, $La_{0.5}Sr_{0.5}Fe_{0.9}Ti_{0.1}O_{3-\omega}$ or $La_{0.6}Sr_{0.4}Fe_{0.9}Ga_{0.1}O_{3-\omega}$.; and

(iii) - optionally, up to 2.5% by volume of a compound $(C_{3-4})$ produced from at least one chemical reaction represented by the equation:

$$xF_{C3} + yF_{C4} \rightarrow zF_{C3-4},$$

in which equation $F_{C3}$, $F_{C4}$ and $F_{C3-4}$ represent the respective raw formulae of compounds $(C_3)$, $(C_4)$ and $(C_{3-4t})$, and x, y and z represent rational numbers greater than or equal to 0;

**(c) and a catalytic layer $(C_{C1})$,** capable of promoting the reaction of partial oxidation of methane by gaseous oxygen to carbon monoxide and hydrogen, the said catalytic layer $(C_{C1})$, of thickness $E_{C1}$, having a volume porosity of between 20% and 80%, being adjacent to the said dense layer $(C_{D1})$ and consisting of a material $(A_{C1})$ comprising, per 100% of its volume:

(i) - at least 10% by volume and at most 100% by volume of a compound $(C_5)$ chosen from doped ceramic oxides which, at the use temperature of between 600°C and 1100°C, are in the form of a crystal lattice having oxide ion vacancies of perovskite phase, of formulae:

$La_{1-x}Ce_xFe_{1-y-v}Ni_yRh_vO_{3-w}$, $La_{1-x}Ce_xFe_{1-y}Ni_yO_{3-w}$, $La_{1-x}Sr_xFe_{1-y-v}Ni_yRh_vO_{3-w}$, and $La_{1-x}Sr_xFe_{1-y}Ni_yO_{3-w}$,

in which

- $0 < x \leq 0.5$;
- $0 < y \leq 0.9$;
- $0 \leq v \leq 0.9$;
- $0 \leq (y + v) \leq 0.9$; and
- w is such that the structure in question is electrically neutral;

and more particularly those of formulae:

$La_{0.8}Ce_{0.2}Fe_{0.65}Ni_{0.30}Rh_{0.05}O_{3-w}$, $La_{0.8}Ce_{0.2}Fe_{0.7}Ni_{0.3}O_{3-w}$, $La_{0.8}Sr_{0.2}Fe_{0.65}Ni_{0.30}Rh_{0.05}O_{3-w}$, $La_{0.6}Sr_{0.4}Fe_{0.7}Ni_{0.3}O_{3-w}$ and $La_{0.8}Sr_{0.2}Fe_{0.7}Ni_{0.3}O_{3-w}$.

(ii) - optionally up to 90% by volume of a compound $(C_6)$, which differs from compound $(C_5)$, chosen from nickel (Ni), iron (Fe), cobalt (Co), palladium (Pd), platinum (Pt), rhodium (Rh), ruthenium (Ru) or a mixture of these metals, optionally deposited on an oxide or non-oxide ceramic support, in an amount from 0.1% to 60% by weight of the said metal or of the mixture of metals, the said ceramic supports being chosen: <u>either from</u> oxide-

type materials such as boron oxide, aluminum oxide, cerium oxide, silicon oxide, titanium oxide, zirconium oxide, zinc oxide, magnesium oxide or calcium oxide, preferably from magnesium oxide (MgO), calcium oxide (CaO), aluminum oxide ($Al_2O_3$), zirconium oxide ($ZrO_2$), titanium oxide ($TiO_2$) or ceria ($CeO_2$); aluminum and/or magnesium silicates, such as mullite ($2SiO_2.3Al_2O_3$), cordierite ($Mg_2Al_4Si_5O_{18}$) or the spinel phase $MgAl_2O_4$; calcium-titanium mixed oxide ($CaTiO_3$) or calcium-aluminum mixed oxide ($CaAl_{12}O_{19}$); calcium phosphates and their derivatives, such as hydroxylapatite $Ca_{10}(PO_4)_6(OH)_2$ or tricalcium phosphate $Ca_3(PO_4)_2$; or else materials of the perovskite type, such as $La_{0.5}Sr_{0.5}Fe_{0.9}Ti_{0.1}O_{3-\delta}$, $La_{0.6}Sr_{0.4}Fe_{0.9}Ga_{0.1}O_{3-\delta}$, $La_{0.5}Sr_{0.5}Fe_{0.9}Ga_{0.1}O_{3-\delta}$ or $La_{0.6}Sr_{0.4}Fe_{0.9}Ti_{0.1}O_{3-\delta}$, <u>or else from</u> materials of the non-oxide type, preferably chosen from carbides or nitrides such as silicon carbide (SiC), boron nitride (BN), aluminum nitride (AlN) or silicon nitride ($Si_3N_4$), sialons (SiAlON);

(iii) - optionally up to 2.5% by volume of a compound ($C_{5-6}$) produced from at least one chemical reaction represented by the equation:

$$xF_{C5} + yF_{C6} \rightarrow zF_{C5-6},$$

in which equation $F_{C5}$, $F_{C6}$ and $F_{C5-6}$, represent the respective raw formulae of compounds ($C_5$), ($C_6$) and ($C_{5-6}$), and x, y and z represent rational numbers greater than or equal to 0; so as to constitute an assembly $E_1$ consisting of three successive layers $\{(C_{C1}), (C_{D1}), (C_{P1})\}$, in which at least one of the chemical elements actually present in compound ($C_1$) is different from one of the chemical elements actually present in compound ($C_3$).

In the assembly defined above, the thickness $E_{D1}$ of the dense layer $C_{D1}$ is less than or equal to 500 $\mu$m, more particularly less than or equal to 300 $\mu$m and preferably less than or equal to 250 $\mu$m. This thickness $E_{D1}$ is also generally greater than or equal to 10 $\mu$m and preferably greater than or equal to 50 $\mu$m.

The thickness $E_{P1}$ of the porous layer $C_{P1}$ is less than or equal to $10^4$ $\mu$m and preferably less than or equal to $5 \times 10^3$ $\mu$m. This thickness is generally greater than or equal to 10 $\mu$m and preferably greater than or equal to 500 $\mu$m.

The thickness $E_{C1}$ of the catalytic layer $C_{C1}$ is less than or equal to $10^4$ $\mu$m, more particularly less than or equal to $10^3$ $\mu$m and preferably less than or equal to 500 $\mu$m. This thickness $E_{C1}$ is generally greater than or equal to 1 $\mu$m and preferably greater than or equal to 5 $\mu$m.

In the definition of the dense layer $C_{D1}$, the expression "porosity less than or equal to 5% by volume" is understood to mean that the dense layer is completely impermeable to gas. In this case the porosity is said to be "closed" (no interconnection between the pores). The porosity is measured by mercury porous symmetry in the case of interconnected open porosity and by image analysis using scanning electron microscopy or by density measurement in the case of closed porosity.

In the definition of the porous layer $C_{P1}$ and of the catalytic layer $C_{C1}$, the expression "volume porosity between 20% and 80%" is understood to mean that, after sintering, the material undergoes a mercury porous symmetry measurement, the result of which shows a porosity value between 20% and 80% (in this case, interconnected open porosity). This mercury porous symmetry analysis is supplemented by image analysis of micrographs obtained by scanning electron microscopy.

Preferably, the total open porosity of the porous layer $C_{P1}$ is between 30% and 70%.

The pore size (diameter) is between 0.1 $\mu$m and 50 $\mu$m, and is preferably between 0.1 and 20 $\mu$m.

Preferably, the catalytic layer $C_{C1}$ has porosity not less than 30% and not exceeding 50%.

In the catalytic layer $C_{C1}$, the pore size is between 0.1 $\mu$m and 50 $\mu$m and is preferably between 0.1 $\mu$m and 20 $\mu$m.

In the organized assembly as defined above, the grains of compounds ($C_2$), ($C_4$), and ($C_6$) optionally present in materials ($A_{D1}$), ($A_{P1}$) and ($A_{C1}$) respectively, are equiaxed with a diameter of between 0.1 $\mu$m and 5 $\mu$m and preferably less than 1 $\mu$m; the volume proportions of compounds ($C_{1-2}$), ($C_{3-4}$) and ($C_{5-6}$) optionally present in the materials ($A_{D1}$), ($A_{P1}$) and ($A_{C1}$) respectively are more particularly less than or equal to 1.5% and even more particularly less than or equal to 0.5% by volume. Frequently, they tend towards 0 if the chemical reactivity between the predominant material and the dispersoid is low.

In the organized assembly based on superposed layers of materials of similar chemical nature, as defined above, the volume proportions of compounds ($C_2$), ($C_4$) and ($C_6$) optionally present in the materials ($A_{D1}$), ($A_{P1}$) and ($A_{C1}$) are more particularly greater than or equal to 0.1% and less than or equal to 10%, and preferably greater than or equal to 1% and less than or equal to 5%.

According to another particular aspect, the subject of the invention is an organized assembly based on superposed layers, as defined above, characterized in that it comprises:

(a) - a dense layer (C'$_{D1}$) corresponding to the layer (C$_{D1}$) defined above and for which the material (A$_{D1}$) comprises, per 100% of its volume:

(i) - at least 95% by volume and at most 100% by volume of a compound ($C_1$) chosen from compounds of formula:

$$La_{1-x-u}Sr_xAl_uFe_{1-y}Ti_yO_{3-w}, \quad La_{1-x-u}Sr_xCa_uFe_{1-y}Ti_yO_{3-w}, \quad La_{1-x-u}Sr_xBa_uFe_{1-y}Ti_yO_{3-w},$$
$$La_{1-x-u}Sr_xAl_uFe_{1-y}Ga_yO_{3-w}, \quad La_{1-x-u}Sr_xCa_uFe_{1-y}Ga_yO_{3-w}, \quad La_{1-x-u}Sr_xBa_uFe_{1-y}Ga_yO_{3-w}, \quad La_{1-x}Sr_xFe_{1-y}Ti_yO_{3-w},$$
$$La_{1-x}Sr_xFe_{1-y}Ga_yO_{3-w}, La_{1-x-u}Sr_xCa_uFeO_{3-w}, La_{1-u}Ca_uFeO_{3-w}, \text{ or } La_{1-x}Sr_xFeO_{3-w},$$

in which:

- $0 < x \le 0.5$;
- $0 < u \le 0.5$;
- $(x + u) \le 0.5$;
- $0 \le y \le 0.9$; and
- w is such that the structure in question is electrically neutral;

(ii) - optionally up to 5% by volume of a compound ($C_2$), which differs from compound ($C_1$), as defined above; and
(iii) - optionally up to 0.5% by volume of a compound ($C_{1-2}$) produced from at least one chemical reaction represented by the equation:

$$xF_{C1} + yF_{C2} \rightarrow zF_{C1-2},$$

in which equation $F_{C1}$, $F_{C2}$ and $F_{C1-2}$, represent the respective raw formulae of compounds ($C_1$), ($C_2$) and ($C_{1-2}$) and x, y and z represent rational numbers greater than or equal to 0;

**(b) - a porous layer ($C'_{P1}$)** corresponding to layer ($C_{P1}$) defined above, for which the material ($A_{P1}$) comprises, per 100% of its volume:

(i) - at least 95% by volume and at most 100% by volume of a compound ($C_3$) chosen from compounds of formula:

$$La_{1-x}Sr_xFe_{1-y}Ga_yO_{3-w}, \quad La_{1-x}Sr_xFe_{1-y}Ti_yO_{3-w}, \quad La_{1-x}Sr_xFeO_{3-w}, \quad La_{1-u}Ca_uFe_{1-y}Ga_yO_{3-w},$$
$$La_{1-u}Ca_uFe_{1-y}Ti_yO_{3-w}, \quad La_{1-u}Ca_uFeO_{3-w}, \quad La_{1-u}Ba_uFe_{1-y}Ga_yO_{3-w}, \quad La_{1-u}Ba_uFe_{1-y}Ti_yO_{3-w}, \quad La_{1-u}Ba_uFeO_{3-w},$$
$$La_{1-x-u}Sr_xAl_uFe_{1-y}Ti_yO_{3-w}, \quad La_{1-x-u}Sr_xCa_uFe_{1-y}Ti_yO_{3-w}, \quad La_{1-x-u}Sr_xBa_uFe_{1-y}Ti_yO_{3-w}, \quad La_{1-x-u}Sr_xAl_uFe_{1-y}Ga_yO_{3-w},$$
$$La_{1-x-u}Sr_xCa_uFe_{1-y}Ga_yO_{3-w}, \text{ or } La_{1-x-u}Sr_xBa_uFe_{1-y}Ga_yO_{3-w},$$

in which:

- $0 < x \le 0.5$;
- $0 < u \le 0.5$;
- $(x + u) \le 0.5$;
- $0 \le y \le 0.9$;
and
- w is such that the structure in question is electrically neutral;

(ii) - optionally up to 5% by volume of a compound ($C_4$), which is different from compound ($C_3$), as defined above; and
(iii) - optionally up to 0.5% by volume of a compound ($C_{3-4}$) produced from at least one chemical reaction represented by the equation:

$$xF_{C3} + yF_{C4} \rightarrow zF_{C3-4},$$

in which equation $F_{C3}$, $F_{C4}$ and $F_{C3-4}$, represent the respective raw formulae of compounds ($C_3$), ($C_4$) and ($C_{3-4}$) and x, y and z represent rational numbers greater than or equal to 0;

**(c) - and a catalytic layer ($C'_{C1}$)** corresponding to layer ($C_{C1}$) defined above, for which the material ($A_{C1}$) comprises, per 100% of its volume:

(i) - at least 95% by volume and at most 100% by volume of a compound ($C_5$) chosen from compounds of formula:

$$La_{1-x}Ce_xFe_{1-y-v}Ni_yRh_vO_{3-w}, \qquad La_{1-x}Ce_xFe_{1-y}Ni_yO_{3-w}, \qquad La_{1-x}Sr_xFe_{1-y-v}Ni_yRh_vO_{3-w},$$
$$La_{0.6}Sr_{0.4}Fe_{0.70}Ni_{0.30}O_{3-w} \text{ and } La_{1-x}Sr_xFe_{1-y}Ni_yO_{3-w},$$

in which:

  - $0 < x \leq 0.5$;
  - $0 \leq y \leq 0.7$;
  - $0 \leq v \leq 0.5$;
  - $0 \leq (y + v) \leq 0.8$; and
  - w is such that the structure in question is electrically neutral;

(ii) - optionally up to 5% by volume of a compound ($C_6$), which is different from compound ($C_5$), as defined above; and
(iii) - optionally up to 0.5% by volume of a compound ($C_{5-6}$) produced from at least one chemical reaction represented by the equation:

$$xF_{C5} + yF_{C6} \rightarrow zF_{C5-6},$$

in which equation $F_{C5}$, $F_{C6}$ and $F_{C5-6}$, represent the respective raw formulae of compounds ($C_5$), ($C_6$) and ($C_{5-6}$) and x, y and z represent rational numbers greater to or equal to 0;

According to this particular aspect, the organized assembly based on superposed layers of materials of similar chemical nature, as defined above, preferably comprises:

**(a) - a dense layer ($C''_{D1}$)** corresponding to layer ($C'_{D1}$) defined above and for which the material ($A_{D1}$) comprises, per 100% of its volume:

(i) - at least 95% by volume and at most 100% by volume of a compound ($C_1$) chosen from compounds of formula $\qquad La_{0.6}Sr_{0.4}Fe_{0.9}Ga_{0.1}O_{3-w}, \qquad La_{0.7}Sr_{0.3}Fe_{0.9}Ga_{0.1}O_{3-w} \qquad La_{0.8}Sr_{0.2}Fe_{0.7}Ga_{0.3}O_{3-w},$ $La_{0.7}Sr_{0.3}Fe_{0.7}Ga_{0.3}O_{3-w}$ or $La_{0.5}Sr_{0.5}Fe_{0.9}Ti_{0.1}O_{3-w}$;
(ii) - optionally up to 5% by volume of a compound ($C_2$), which differs from compound ($C_1$), as defined above; and
(iii) - optionally up to 0.5% by volume of a compound ($C_{1-2}$) produced from at least one chemical reaction represented by the equation:

$$xF_{C1} + yF_{C2} \rightarrow zF_{C1-2},$$

in which equation $F_{C1}$, $F_{C2}$ and $F_{C1-2}$, represent the respective raw formulae of compounds ($C_1$), ($C_2$) and ($C_{1-2}$) and x, y and z represent rational numbers greater than or equal to 0;

**(b) - a porous layer ($C''_{P1}$)** corresponding to layer ($C'_{P1}$) defined above for which the material ($A_{P1}$) comprises, per 100% of its volume:

(i) - at least 95% by volume and at most 100% by volume of a compound ($C_3$) chosen from compounds of formula:

$$La_{0.6}Sr_{0.4}Fe_{0.9}Ga_{0.1}O_{3-w}, \qquad La_{0.9}Sr_{0.1}Fe_{0.9}Ga_{0.1}O_{3-w}, \qquad La_{0.5}Sr_{0.5}Fe_{0.9}Ti_{0.1}O_{3-w},$$
$$La_{0.9}Sr_{0.1}Fe_{0.9}Ti_{0.1}O_{3-w}, \quad La_{0.6}Sr_{0.4}Fe_{0.2}Co_{0.8}O_{3-w} \text{ or } La_{0.9}Sr_{0.1}Fe_{0.2}Co_{0.8}O_{3-w}, \quad La_{0.7}Sr_{0.3}Fe_{0.9}Ga_{0.1}O_{3-w},$$
$$La_{0.8}Sr_{0.2}Fe_{0.7}Ga_{0.3}O_{3-w} \quad La_{0.7}Sr_{0.3}Fe_{0.7}Ga_{0.3}O_{3-w};$$

(ii) - optionally up to 5% by volume of a compound ($C_4$), which differs from compound ($C_3$), as defined above; and
(iii) - optionally up to 0.5% by volume of a compound ($C_{3-4}$) produced from at least one chemical reaction represented by the equation:

$$xF_{C3} + yF_{C4} \rightarrow zF_{C3\text{-}4},$$

in which equation $F_{C3}$, $F_{C4}$ and $F_{C3\text{-}4}$, represent the respective raw formulae of compounds $(C_3)$, $(C_4)$ and $(C_{3\text{-}4})$ and x, y and z represent rational numbers greater than or equal to 0;

**(c) - and a catalytic layer $(C''_{C1})$** corresponding to layer $(C'_{C1})$ defined above, for which the material $(A_{C1})$ comprises, per 100% of its volume:

(i) - at least 95% by volume and at most 100% by volume of a compound $(C_5)$ chosen from compounds of formula, $La_{0.8}Ce_{0.2}Fe_{0.65}Ni_{0.30}Rh_{0.05}O_{3\text{-}w}$, $La_{0.8}Ce_{0.2}Fe_{0.7}Ni_{0.3}O_{3\text{-}w}$, $La_{0.8}Sr_{0.2}Fe_{0.65}Ni_{0.30}Rh_{0.05}O_{3\text{-}w}$, $La_{0.6}Sr_{0.4}Fe_{0.70}Ni_{0.30}O_{3\text{-}w}$, and $La_{0.8}Sr_{0.2}Fe_{0.7}Ni_{0.3}O_{3\text{-}w}$;

(ii) - optionally up to 5% by volume of a compound $(C_6)$, which differs from compound $(C_5)$, as defined above; and

(iii) - optionally up to 0.5% by volume of a compound $(C_{5\text{-}6})$ produced from at least one chemical reaction represented by the equation:

$$xF_{C5} + yF_{C6} \rightarrow zF_{C5\text{-}6},$$

in which equation $F_{C5}$, $F_{C6}$ and $F_{C5\text{-}6}$, represent the respective raw formulae of compounds $(C_5)$, $(C_6)$ and $(C_{5\text{-}6})$ and x, y and z represent rational numbers of greater than or equal to 0;

According to another particular aspect of the present invention, in the organized assembly based on superposed layers of materials of similar chemical nature, as defined above, one, several or all of the layers from among layers $C_{P1}$ and $C_{C1}$ have a discrete porosity gradient, that is to say volume porosity of which varies discretely over the thickness of the layer between a maximum value (on the outside of the layer) and a minimum value (on the inside of the layer, close to the dense membrane).

According to another particular aspect of the present invention, in the organized assembly based on superposed layers of materials of similar chemical nature, as defined above, one, several or all of the layers from among the layers $C_{P1}$ and $C_{C1}$ have a continuous porosity gradient, that is to say the volume porosity of which varies continuously over the thickness of the layer between a maximum value (on the outside of the layer) and a minimum value (on the inside of the layer, close to the dense membrane).

Such a porosity gradient is achieved by implementing the process described, for example, in WO 02/46122 which comprises the infiltration of a porous pore-forming substrate by a tape casting suspension.

According to another particular aspect of the present invention, in the organized assembly based on superposed layers of materials of similar chemical nature, as defined above, one, several or all of the dense, porous or catalytic layers have a discrete composition gradient, that is to say the chemical nature of these layers varies discretely over the thickness of the layer or between the layers.

According to another particular aspect of the present invention, in the organized assembly based on superposed layers of materials of similar chemical nature, as defined above, one, several or all of the dense, porous or catalytic layers have a surface concentration gradient of the material of the adjacent layer. Such a gradient may be obtained by implementing the process described, for example, in WO 03/00439 for a planar system.

The organized assembly based on superposed layers of materials of similar chemical nature, forming the subject of the present invention and as defined above, is mainly of planar or tubular form. When it is of tubular form, the CMR thus formed is closed at one of its ends.

The PCMR is prepared by assembling, in the green state, the various layers and the multilayer assembly is either sintered in a single step, called co-sintering, or in several steps.

In general, the tubular PCMR includes a porous support on the outside of which a dense membrane is deposited. The porous support may be formed by extrusion or by isostatic pressing. The dense membrane is deposited on the porous support "in the green state" by various techniques such as, for example, dip coating or spray coating. The assembly (porous support + dense membrane) is co-sintered. The reforming catalyst is then deposited on the outside (on the dense membrane) by various techniques such as, for example, by dip coating or spray coating, and then fired at a temperature below the sintering temperature of the PCMR.

Preferably, a tubular PCMR, which includes a dense layer supported by a porous layer and covered on its outer face with a catalytic layer, is prepared by coextruding the dense layer and the porous layer. The assembly is sintered, the catalytic layer is applied to the external face of the bilayer obtained, and the assembly (catalyst layer + dense membrane/porous support) is fired at a temperature below the sintering temperature. In a second approach, the catalytic layer may be coextruded at the same time as the dense layer and the porous layer. The process is therefore a tri-extrusion process, the system (catalyst/dense membrane/support) being co-sintered.

The coextrusion process is described in French patent application filed on 12 May 2004 and registered under No 04/05124.

In the process as defined above, the sintering temperature of the material is between 800 and 1500°C, preferably between 1000°C and 1350°C.

According to one particular aspect of the invention, the co-sintering process is carried out while controlling the oxygen partial pressure ($pO_2$) of the gaseous atmosphere surrounding the reaction mixture. Such a process is described in French patent application filed on 11 July 2003 and registered under No 03/50234.

In the process as defined above, the sintering temperature of the material is between 800 and 1500°C, preferably between 1000°C and 1350°C.

According to a final aspect, the subject of the invention is a reactor of non zero internal volume V, intended for the production of synthesis gas by the oxidation of natural gas, characterized in that it comprises either an organized assembly of tubular form, based on superposed layers of materials of similar chemical nature, as defined above, in which the catalytic layer ($C_{C1}$), capable of promoting the reaction of methanoxidation by gaseous oxygen to carbon monoxide, is located on the external surface of the said assembly of tubular form closed at one of its ends, or a combination of several of these said assemblies of tubular form that are mounted in parallel, which is characterized in that the free volume $V_f$ inside the reactor is greater than or equal to 0.25V and is preferably greater than or equal to 0.5V.

According to one particular aspect of this device, in the reactor as defined above, a non-zero fraction of the volume $V_f$ contains a steam-reforming catalyst.

The term "steam reforming catalyst" refers to catalysts characterized by the presence of transition metals (Ni, Fe, etc.) and/or of one or more noble metals (Pd, Pt, Rh, Ru, etc.) deposited on oxide or non-oxide ceramic supports, an amount ranging from 0.1 to 60% by weight of the said metal or mixture of metals, the said ceramic supports chosen either from oxide-type materials, such as boron oxide, aluminum oxide, gallium oxide, cerium oxide, silicon oxide, titanium oxide, zirconium oxide, zinc oxide, magnesium oxide or calcium oxide, preferably from magnesium oxide (MgO), calcium oxide (CaO), aluminum oxide ($Al_2O_3$), zirconium oxide ($ZrO_2$), titanium oxide ($TiO_2$) or ceria ($CeO_2$); aluminum and/or magnesium silicates, such as mullite ($2SiO_2.3Al_2O_3$) or cordierite ($Mg_2Al_4Si_5O_{18}$) or such as the spinel phase $MgAl_2O_4$; the calcium-titanium mixed oxide ($CaTiO_3$), or $CaAl_{12}O_{19}$; calcium phosphates and their derivatives, such as hydroxy-lapatite $Ca_{10}(PO_4)_6(OH)_2$ or tricalcium phosphate $Ca_3(PO_4)_2$; or else materials of the perovskite type such as

$La_{0.5}Sr_{0.5}Fe_{0.9}Ti_{0.1}O_{3-\delta}$, $La_{0.6}Sr_{0.4}Fe_{0.9}Ga_{0.1}O_{3-\delta}$, $La_{0.5}Sr_{0.5}Fe_{0.9}Ti_{0.1}O_{3-\delta}$ or $La_{0.6}Sr_{0.4}Fe_{0.9}Ga_{0.1}O_{3-\delta}$; or else from materials of non-oxide type and preferably from carbides or nitrides, such as silicon carbide (SiC), boron nitride (BN) or aluminum nitride (AlN) or silicon nitride ($Si_3N_4$), or SiAlONs. The geometry of the reforming catalysts contained between the PCMR tubes may be rods, extrudates or spheres of various sizes.

## Description of the figures

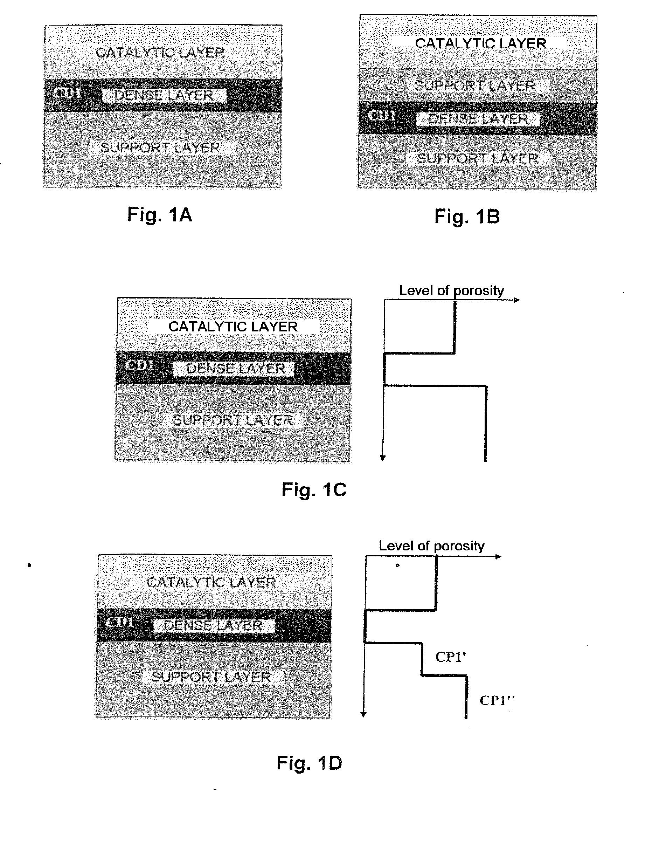

Figure 1A: This figure illustrates one particular architecture of the PCMR, which comprises a porous support layer ($C_{P1}$) and a catalyst layer ($C_{C1}$) on either side of a dense layer ($C_{D1}$). The chemical nature and the crystallographic nature of the layers ($C_{P1}$, $C_{C1}$, $C_{D1}$) illustrated in this figure are defined in the invention.

Figure 1 C: This figure illustrates one particular distribution of the porosity for a PCMR having the architecture described in Figure 1A. The catalytic layer ($C_{C1}$) and the support layer ($C_{P1}$) each have a degree of porosity that is constant over its entire respective thickness. The degree of porosity of the catalytic layer ($C_{C1}$) and that of the support layer ($C_{P1}$) may be identical or different. The chemical nature and the crystallographic nature of the layers ($C_{P1}$, $C_{C1}$, $C_{D1}$) illustrated in this figure are defined in the invention.

Figure 1D: This figure illustrates one particular distribution of the porosity for a PCMR having the architecture described in Figure 1A. The catalytic layer ($C_{C1}$) has a constant degree of porosity over its entire thickness, the support layer ($C_{P1}$) has a degree of porosity varying over its thickness in a discrete manner. The porosity of the support layer ($C_{P1}$), which takes two levels ($C_{P1'}$ and $C_{P1"}$) in this figure, may be extended to three or more levels. The degree of porosity of the catalytic layer ($C_{C1}$) and that of the support layer ($C_{P1}$) may be identical or different. The chemical nature and the crystallographic nature of the layers ($C_{P1}$, $C_{C1}$, $C_{D1}$) illustrated in this figure are defined in the invention.

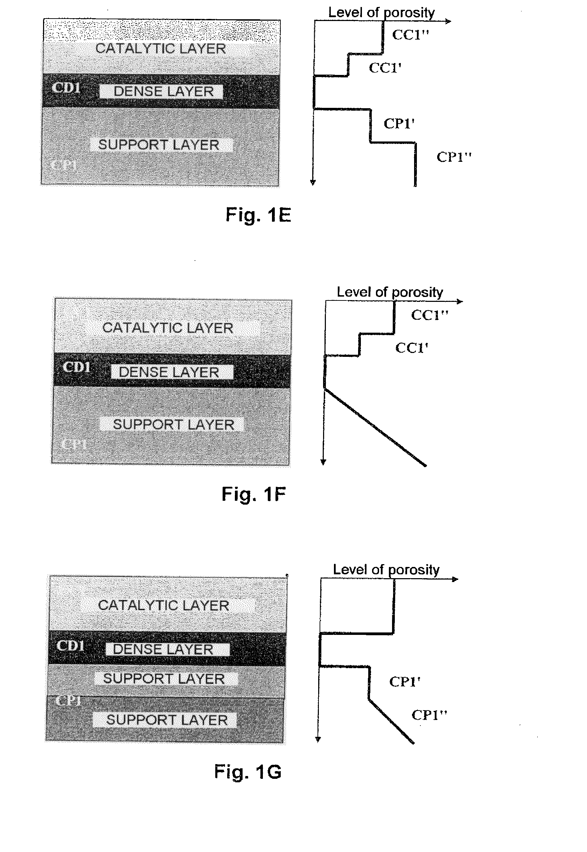

Figure 1E: This figure illustrates one particular distribution of the porosity for a PCMR having the architecture described in Figure 1A. The catalytic layer ($C_{C1}$) and the support layer ($C_{P1}$) each have a degree of porosity varying over its thickness in a discrete manner. The porosities of the support layer ($C_{P1}$) and catalytic layer ($C_{C1}$), which take two levels in this figure, ($C_{P1'}$ and $C_{P1"}$) and ($C_{C1'}$ and $C_{C1"}$) respectively, may be extended to three or more levels. The level of porosity of the catalytic layer ($C_{C1}$) and that of the support layer ($C_{P1}$) may be identical or different.

The chemical nature and the crystallographic nature of the layers ($C_{P1}$, $C_{C1}$, $C_{D1}$) illustrated in this figure are defined in the invention.

Figure 1F: This figure illustrates one particular distribution of the porosity for a PCMR having the architecture described in Figure 1A. The catalytic layer has a level of porosity varying over its thickness in a discrete manner (in the figure, two discrete levels of porosity, $C_{C1'}$ and $C_{C1''}$ respectively, are shown). The support layer ($C_{P1}$) has a level of porosity that varies continuously over its thickness. The chemical nature and the crystallographic nature of the layers ($C_{P1}$, $C_{C1}$, $C_{D1}$) illustrated in this figure are defined in the invention.

Figure 1 G: This figure illustrates one particular distribution of the porosity for a PCMR having the architecture described in Figure 1A. The catalytic layer ($C_{C1}$) has a level of porosity that is constant over its thickness. The support layer ($C_{P1}$) has a level of porosity that varies continuously from a maximum value on its external face to a minimum value at a given depth ($C_{P1''}$), the level of porosity then remains constant up to the dense layer ($C_{P1'}$). The chemical nature and the crystallographic nature of the layers ($C_{P1}$, $C_{C1}$, $C_{D1}$) illustrated in this figure are defined in the invention.

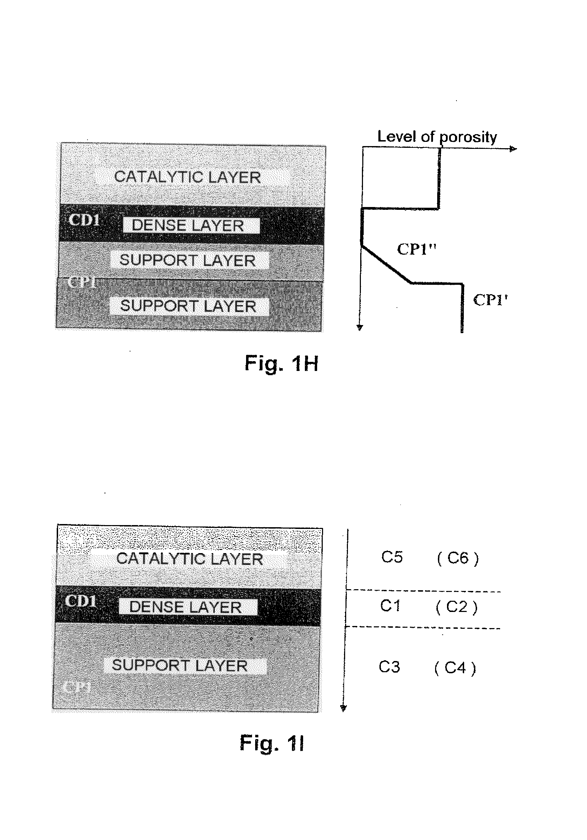

Figure 1H: This figure illustrates one particular distribution of the porosity for a PCMR having the architecture described in Figure 1A. The catalytic layer ($C_{C1}$) has a level of porosity that is constant over its thickness. The support layer ($C_{P1}$) has a level of porosity that is constant between its external face and a given depth ($C_{P1'}$), the level of porosity then decreasing continuously down to the dense layer ($C_{P1''}$). The chemical nature and the crystallographic nature of the layers ($C_{P1}$, $C_{C1}$, $C_{D1}$) illustrated in this figure are defined in the invention.

Figure 1I: This figure illustrates the distribution of compounds ($C_1$) to ($C_6$) in the various layers of a PCMR having the architecture described in Figure 1A. The chemical nature and the crystallographic nature of the layers ($C_{P1}$, $C_{C1}$, $C_{D1}$) illustrated in this figure are defined in the invention. The compound ($C_1$) of the dense layer ($C_{D1}$) and the compound ($C_3$) of the porous support ($C_{P1}$) contain at least two chemical elements in common. Likewise, the compound ($C_1$) of the dense layer ($C_{P1}$) and the compound ($C_5$) of the catalytic layer ($C_{C1}$) contain at least two chemical elements in common. In contrast, the compound ($C_3$) of the porous layer ($C_{P1}$) and the compound ($C_5$) of the catalytic layer ($C_{C1}$) do not necessarily contain two chemical elements in common.

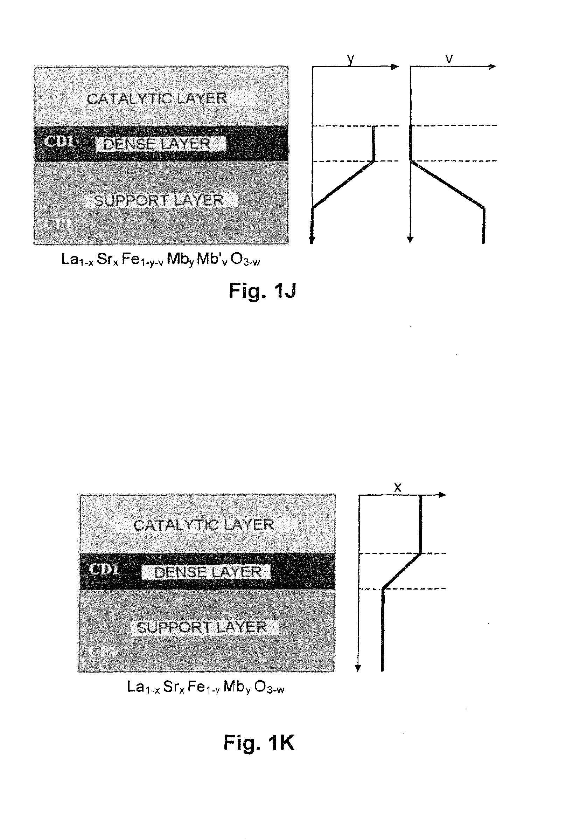

Figure 1J: This figure illustrates one particular distribution of the cations in a PCMR having the architecture described in Figure 1A. The support layer ($C_{P1}$) has a continuous chemical composition gradient at the interface between the dense layer ($C_{D1}$) and the support layer ($C_{P1}$). Compound ($C_3$) of the support layer ($C_{P1}$) is of the

$La_{1-x}Sr_xFe_{1-v}Mb'_vO_{3-w}$ type on its external face for a given cation Mb'. The compound ($C_1$) of the dense layer ($C_{D1}$) is of the $La_{1-x}Sr_xFe_{1-y}Mb_yO_{3-w}$, type for a given cation Mb. The intermediate compound between the dense layer and the surface of the support layer is of the $La_{1-x}Sr_xFe_{1-y-v}Mb_yMb'_vO_{3-w}$, type where y and v vary continuously over the thickness of the zone within this compound. The chemical nature and the crystallographic nature of the layers illustrated in this figure are defined in the invention.

Figure 1K: This figure illustrates one particular distribution of the cations in a PCMR having the architecture described in Figure 1A. The dense layer has a continuous chemical composition gradient over its thickness. The compounds ($C_1$), ($C_3$) and ($C_5$) are of the $La_{1-x}Sr_xFe_{1-y}Mb_yO_{3-w}$ type, the nature of Mb and the value of y varying according to the layer. The degree of substitution of the lanthanum by strontium, x, varies continuously over the thickness of the dense layer. The value of x at the interface between the dense layer and the support layer may be identical or different on either side of the interface. Likewise, the value of x at the interface between the dense layer and the catalytic layer may be identical or different on either side of the interface. The chemical nature and crystallographic nature of the layers illustrated in this figure are defined in the invention.

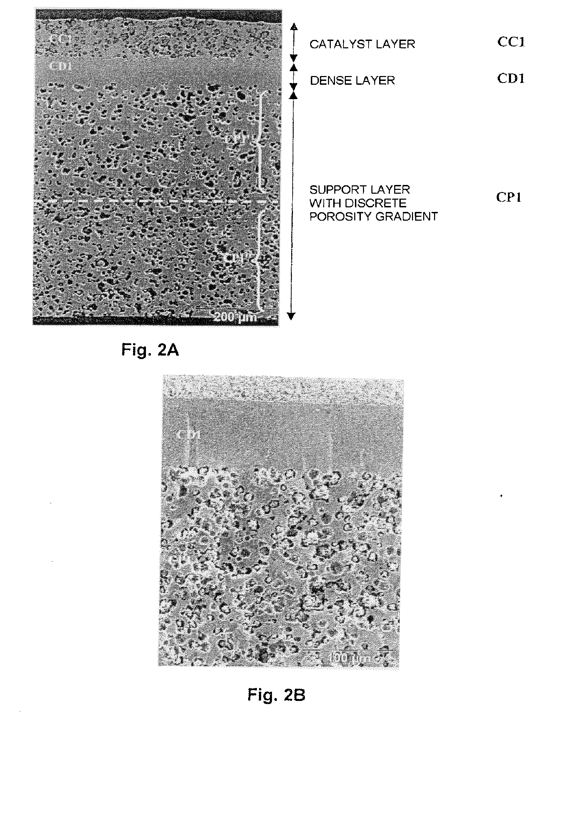

Figure 2A: A micrograph of a PCMR comprising a porous support layer with a discrete porosity gradient ($C_{P1}$ containing $C_{P1'}$ and $C_{P1''}$) and a porous catalyst layer ($C_{C1}$) on either side of a thin dense layer ($C_{D1}$), all of the layers being of perovskite type. The formulations of the compounds of the various layers are presented in the examples. The architecture of this PCMR corresponds to that described in Figure 1D.

Figure 2B: A micrograph of a PCMR comprising a porous support layer ($C_{P1}$), a thin dense layer ($C_{D1}$) and a catalytic layer ($C_{C1}$), all of the layers being of perovskite type. The formulations of the compounds of the various layers are presented in the examples. The architecture of this PCMR corresponds to that described in Figure 1C.

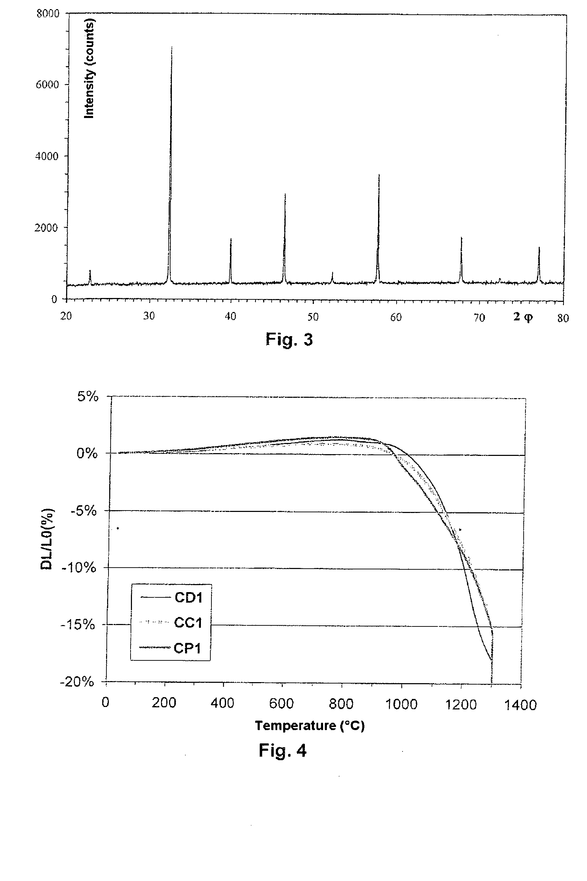

Figure 3: An X-ray diffraction pattern for polycrystalline specimens of a compound of perovskite type.

The present invention improves the current state of the art since the use of chemically similar and structurally identical materials allows continuity of the thermomechanical and thermochemical properties over the entire PCMR. The risk of debonding or cracking at the interfaces, or within a layer, is then greatly reduced. Since the expansion coefficients and the shrinkage at sintering of the various materials are similar (Figure 4), it is possible to sinter all of the layers in a single step (co-sintering), thereby limiting the forming operations (heat treatment) while reducing the manufacturing cost of the PCMR. The following examples illustrate the invention without however limiting it.

**Example 1: Preparation of an assembly according to the invention**

A - Preparation of $La_{0.6}Sr_{0.4}Fe_{0.9}Ga_{0.1}O_{3-\delta}$ (compound $C_1$)

Compound ($C_1$) was prepared by high-temperature reaction of precursors in the solid state.

(1) - To synthesize 100 g of compound $C_1$, the following masses of precursors were weighed after a preliminary heat treatment step so as to remove any residual water or gaseous impurities therefrom:

44.34 g of $La_2O_3$ (Ampere Industrie; purity > 99.99% by weight);
26.79 g of $SrCO_3$ (Solvay Baris; purity > 99% by weight);
32.60 g of $Fe_2O_3$ (Alfa Aesar; purity > 99% by weight);
4.25 g of $Ga_2O_3$ (Sigma Aldrich; purity > 99% by weight).

(2) - The mixture was milled in a polyethylene jar provided with a rotating blade, made of the same polymer, in the presence of spherical yttriated zirconia (YSZ) balls, an aqueous or organic solvent and optionally a dispersant. This attrition milling operation resulted in a uniform blend of smaller-diameter powder particles having a relatively spherical shape and a monomodal particle size distribution. After this first milling operation, the mean particle diameter was between 0.3 $\mu$m and 2 $\mu$m. The contents of the jar were screened using a 200 $\mu$m screen to separate the powder from the balls.
(3) - The screened material was dried and then calcined over an alumina refractory in a furnace, in air or in a controlled atmosphere. The temperature was then increased up to a hold temperature between 900°C and 1200°C, and held there for 5 h to 15 h. The rate of temperature rise was typically between 5°C/min and 15°C/min, the rate of fall being governed by the natural cooling of the furnace.

An XRD analysis then enabled the state of reaction of the powders to be verified. If necessary, the powder was milled and/or calcined again using the same protocol until the reaction of the precursors was complete and resulted in the desired perovskite phase (see Figure 3). The compound $La_{0.6}Sr_{0.4}Fe_{0.9}Ga_{0.1}O_{3-\delta}$ was thus obtained.

B - Preparation of a material $A_{D1}$ (98% $La_{0.6}Sr_{0.4}Fe_{0.9}Ga_{0.1}O_{3-\delta}$ by volume + 2% MgO by volume)

The material $A_{D1}$ was obtained by mixing 98% by volume of compound $C_1$ prepared in the preceding section and 2% by volume of commercial magnesium oxide (MgO).

C - Preparation of $La_{0.5}Sr_{0.5}Fe_{0.9}Ti_{0.1}O_{3-\delta}$ (compound $C_3$)

Compound ($C_3$) was prepared by high-temperature reaction of precursors in the solid state.

(1) - To synthesize 100 g of compound $C_3$, the following masses of precursors were weighed after a preliminary heat treatment step so as to remove any residual water or gaseous impurities therefrom:

38.37 g of $La_2O_3$ (Ampere Industrie; purity > 99.99% by weight);
34.77 g of $SrCO_3$ (Solvay Baris; purity > 99% by weight);
33.85 g of $Fe_2O_3$ (Alfa Aesar; purity > 99% by weight);
1.88 g of $TiO_2$ (Sigma Aldrich; purity > 99% by weight).

(2) - The mixture was milled in a polyethylene jar provided with a rotating blade, made of the same polymer, in the presence of spherical yttriated zirconia (YSZ) balls, an aqueous or organic solvent and optionally a dispersant. This attrition milling operation resulted in a uniform blend of smaller-diameter powder particles having a relatively spherical shape and a monomodal particle size distribution. After this first milling operation, the mean particle diameter was between 0.3 $\mu$m and 2 $\mu$m. The contents of the jar were screened using a 200 $\mu$m screen to separate the powder from the balls.
**(3)** - The screened material was dried and then calcined over an alumina refractory in a furnace, in air or in a controlled atmosphere. The temperature was then increased up to a hold temperature between 900°C and 1200°C, and held there for 5 h to 15 h. The rate of temperature rise was typically between 5°C/min and 15°C/min, the rate of fall being governed by the natural cooling of the furnace.

An XRD analysis then enabled the state of reaction of the powders to be verified. If necessary, the powder was milled and/or calcined again using the same protocol until the reaction of the precursors was complete and resulted in the desired perovskite phase (see Figure 3). The compound $La_{0.5}Sr_{0.5}Fe_{0.9}Ti_{0.1}O_{3-\delta}$ was thus obtained.

### D - Preparation of $La_{0.8}Ce_{0.2}Fe_{0.7}Ni_{0.3}O_{3-\delta}$ (compound $C_5$).

The compound ($C_5$) was prepared using a protocol identical to that indicated in section A above, but starting from the following precursor masses:

53.62 g of $La_2O_3$ (Ampere Industrie; purity > 99.99% by weight);
14.16 g of $CeO_2$ (Alfa Aesar; purity > 99.9% by weight);
23.00 g of $Fe_2O_3$ (Alfa Aesar; purity > 99% by weight);
14.65 g of $NiCO_3$ (Alfa Aesar; purity > 99% by weight).

An XRD analysis enabled the reaction state of the powders to be verified. The powders were possibly milled and/or calcined again using the same protocol until the reaction of the precursors was complete and resulted in the desired perovskite phase. The compound $La_{0.8}Ce_{0.2}Fe_{0.7}Ni_{0.3}O_{3-\delta}$ was thus obtained.

### D' - Preparation of $La_{0.6}Sr_{0.4}Fe_{0.7}Ni_{0.3}O_{3-\delta}$ compound $C'_5$)

The compound ($C'_5$) was prepared using a protocol identical to that indicated in the previous section A, but starting with the following precursor masses:

67.41 g of $La_2O_3$ (Ampere Industrie; purity > 99.99% by weight);
40.73 g of $SrCO_3$ (Solvay Baris; purity > 99.9% by weight);
38.55 g of $Fe_2O_3$ (Alfa Aesar; purity > 99% by weight);
24.56 g of $NiCO_3$ (Alfa Aesar; purity>99% by weight).

An XRD analysis enabled the state of reaction of the powders to be verified. The powders were possibly milled and/or calcined again, using the same protocol, until the reaction of the precursors was complete and resulted in the desired perovskite phase. Thus the compound $La_{0.6}Sr_{0.4}Fe_{0.7}Ni_{0.3}O_{3-\delta}$ was obtained.

### E - Preparation of a dense layer $C_{DI}$

The dense layer $C_{DI}$ was produced from the material $A_{DI}$ prepared in section B above and formed by a conventional tape casting process.

### F - Preparation of a material $A_{P1}$ (95% $La_{0.5}Sr_{0.5}Fe_{0.9}Ti_{0.1}O_{3-\delta}$ by volume + 5% MgO by volume)

The material $A_{P1}$ was obtained by blending 95% by volume of compound $C_3$ prepared in section C above with 5% by volume of commercial magnesium oxide (MgO).

### G - Preparation of a porous layer $C_{P1}$

The porous layer $C_{P1}$ was produced from the material $A_{P1}$ prepared in section F above and formed by a conventional tape casting process similar to that of section E. The pores in the layer were obtained after sintering by addition of a pore-forming agent to the liquid suspension of the ceramic material. The term "pore-forming agent" is understood to mean an organic compound, of controlled size and controlled morphology, capable of degrading entirely by a low-temperature heat treatment, typically at 600°C. The final porosity is controlled by choosing the shape, the size and the content of the pore former introduced into the liquid suspension of the ceramic material.

### H - Preparation of a porous layer $C_{p'1+p''1}$

The porous layer $C_{p'1+p''1}$, with a continuous and/or discontinuous controlled-porosity gradient with various porosities P1' and P1" was produced from the material $A_{p1}$ prepared in section F above,

(i) - by infiltration of a porous pore-forming substrate of controlled thickness by a liquid suspension of the ceramic material $A_{p1}$ in the case of a continuous porosity gradient or
(ii) - by the stacking of tapes of materials $A_{P1'}$ and $A_{p1'}$ of various porosities P1' and P1" having different contents of pore-forming agents (for example 30% and 40% by volume).

The porous pore-forming substrate was itself produced by tape casting a liquid suspension of pore former. The final porosity was controlled by the choice, the shape, the size and the content of the pore former introduced into the liquid suspension of the ceramic material.

The discontinuous and/or continuous porosity gradients were obtained after the sintering.

I - Preparation of a porous layer $C_{C1}$

The porous layer $C_{C1}$ was produced from the material $C_5$ or $C'_5$, prepared respectively in sections D and D' above, and formed by a conventional tape casting process similar to that of section E. The pores in the layer after sintering were produced by the addition of a pore-forming agent to the liquid suspension of the ceramic material.

J - Preparation of a multilayer ($C_{C1}/C_{D1}/C_{P1}$) planar PCMR with a discrete porosity gradient (P1 and P1') in the porous support $C_{P1}$

The multilayer PCMR of planar shape was produced by cutting tapes of the various layers prepared as described in the preceding sections, the cut tapes preferably being of identical size. The stack then underwent thermocompression bonding with the desired architecture.

The thermocompression bonding was carried out at pressures close to 50 MPa and temperatures above the glass transition temperatures of the polymers used for the mechanical integrity of the tape, typically 80°C. After the thermocompression bonding, the multilayer had to be coherent and not cracked.

The multilayer obtained underwent a first heat treatment at 600°C with a slow temperature rise, typically between 0.1 and 2°C/min, in air or in nitrogen.

After this step of removing the binder, the multilayer ($C_{C1}/C_{D1}/C_{P1}$) was co-sintered at 1300°C for 30 minutes in nitrogen.

Figure 2A shows a PCMR consisting, respectively, of:

- a catalytic layer $C_{C1}$ prepared in section I and consisting of the material $C_5$ ($La_{0.8}Ce_{0.2}Fe_{0.7}Ni_{0.3}O_{3-\delta}$, prepared in section D);
- a dense layer $C_{D1}$ consisting of the material $A_{D1}$ prepared in section B;
- a porous layer $C_{P1}$ consisting of the material $A_{P1}$ prepared in section H and having a discrete porosity gradient P1' and P1", as shown in the figure by the zone Cp1' and CP1".

K - Preparation of a multilayer ($C_{C1}/C_{D1}/C_{P1}$) PCMR with a single level of porosity in the porous support $C_{P1}$

The procedure was as in the preceding section, with:

- a catalytic layer $C_{C1}$ prepared in section I and consisting of the material $C'_5$ ($La_{0.6}Sr_{0.4}Fe_{0.7}Ni_{0.3}O_{3-\delta}$ prepared in section D');
- a dense layer $C_{D1}$ consisting of the material $A_{D1}$ prepared in section B; and
- a porous layer $C_{P1}$ consisting of the material $A_{P1}$ prepared in section G and having a single porosity PI.

The multilayer shown in Figure 2B was obtained.

L - Production of a planar PCMR of complex architecture

The thermocompression bonding and sintering protocol carried out on tapes of various types allowed a wide range of possible architectures of the PCMR to be obtained. A discrete porosity gradient within the porous layer could be achieved by stacking two tapes produced from two liquid suspensions having different contents of pore former introduced. The thicknesses of the various layers could be adjusted either by varying the thickness of the tape during the tape casting operation, or by stacking various tapes of the same type. The distribution of the layers in the PCMR was chosen during superposition of the tapes before the thermocompression bonding. Finally, the continuous composition gradient could be obtained during sintering by the chemical elements migrating from one layer to another. In the latter case, the compounds were chosen for their ability to enter into solid solution and the sintering heat treatment was adjusted in order to allow the elements to diffuse.

**M** - Production of a PCMR of tubular shape

The porous support and the dense layer were formed by simultaneously extruding the two layers, or by coextrusion. The tubular bilayer was then sintered, and the catalytic layer was then deposited on the tube by dip coating before a further heat treatment, after which the catalytic layer had the specified porosity.

The present invention improves the current state of the art since the use of chemically similar and structurally identical materials allows continuity of the thermomechanical and thermochemical properties over the entire PCMR. The risk of debonding or cracking at the interfaces, or within a layer, is then greatly reduced. Since the expansion coefficients and the shrinkage at sintering of the various materials are similar (Figure 4), it is possible to sinter all of the layers in a single step (co-sintering), thereby limiting the forming operations (heat treatment) while reducing the manufacturing cost of the PCMR.

**Claims**

1.  Organized assembly based on superposed layers of materials of similar chemical nature, **characterized in that** it comprises:

    **(a)** - **a dense layer ($C_{D1}$)**, with a thickness $E_{D1}$, the porosity of which does not exceed 5% by volume, the said dense layer ($C_{D1}$) consisting of a material ($A_{D1}$) comprising, for 100% of its volume:

    (i) - at least 75% by volume and at most 100% by volume of a compound ($C_1$) chosen from doped ceramic oxides which, at the use temperature of between 600°C and 1 100°C, are in the form of a crystal lattice with oxide ion vacancies of perovskite phase, of formulae:

    $$La_{1-x-u}Sr_xAl_uFe_{1-y}Ti_yO_{3-w}, \quad La_{1-x-u}Sr_xCa_uFe_{1-y}Ti_yO_{3-w}, \quad La_{1-x-u}Sr_xBa_uFe_{1-y}Ti_yO_{3-w},$$
    $$La_{1-x-u}Sr_xAl_uFe_{1-y}Ga_yO_{3-w}, La_{1-x-u}Sr_xCa_uFe_{1-y}Ga_yO_{3-w}, La_{1-x-u}Sr_xBa_uFe_{1-y}Ga_yO_{3-w}, La_{1-}Sr_xFe_{1-y}Ti_yO_{3-w},$$
    $$La_{1-x}Sr_xFe_{1-y}Ga_yO_{3-w}, La_{1-x-u}Sr_xCa_uFeO_{3-w}, La_{1-u}Ca_uFeO_{3-w} \text{ or } La_{1-x}Sr_xFeO_{3-w},$$

    in which

    - $0 < x \leq 0.5$;
    - $0 < u \leq 0.5$;
    - $(x + u) \leq 0.5$;
    - $0 \leq y \leq 0.9$; and
    - w is such that the structure in question is electrically neutral;

    and more particularly those of formulae:

    $$La_{0.6}Sr_{0.4}Fe_{0.9}Ga_{0.1}O_{3-w}, La_{0.7}Sr_{0.3}Fe_{0.9}Ga_{0.1}O_{3-w}, La_{0.8}Sr_{0.2}Fe_{0.7}Ga_{0.3}O_{3-w},$$

    $$La_{0.7}Sr_{0.3}Fe_{0.7}Ga_{0.3}O_{3-w} \text{ or } La_{0.5}Sr_{0.5}Fe_{0.9}Ti_{0.1}O_{3-w};$$

    (ii) - optionally up to 25% by volume of a compound ($C_2$), which differs from compound ($C_1$), chosen from magnesium oxide (MgO), calcium oxide (CaO), aluminum oxide ($Al_2O_3$), zirconium oxide ($ZrO_2$), titanium oxide ($TiO_2$), strontium-aluminum mixed oxides $SrAl_2O_4$ or $Sr_3Al_2O_6$, barium-titanium mixed oxide ($BaTiO_3$), calcium-titanium mixed oxide ($CaTiO_3$), $La_{0.5}Sr_{0.5}Fe_{0.9}Ti_{0.1}O_{3-\omega}$ or $La_{0.6}Sr_{0.4}Fe_{0.9}Ga_{0.1}O_{3-\omega}$.; and
    (iii) - optionally up to 2.5% by volume of a compound ($C_{1-2}$) produced from at least one chemical reaction represented by the equation:

    $$xF_{C1} + yF_{C2} \rightarrow zF_{C1-2},$$

    in which equation $F_{C1}$, $F_{C2}$ and $F_{C1-2}$ represent the respective raw formulae of compounds ($C_1$), ($C_2$) and ($C_{1-2}$) and x, y and z represent rational numbers greater than or equal to 0;

    **(b)** - **a porous layer ($C_{P1}$)**, with a thickness of $E_{P1}$, the volume porosity of which is between 20% and 80%, adjacent to the said dense layer ($C_{D1}$), the said porous layer ($C_{P1}$) consisting of a material ($A_{P1}$) comprising, per 100% of its volume:

(i) - at least 75% by volume and at most 100% by volume of a compound ($C_3$) chosen from doped ceramic oxides which, at the use temperature of between 600°C and 1 100°C, are in the form of a crystal lattice having oxide ion vacancies of perovskite phase, of formulae:

$$La_{1-x}Sr_xFe_{1-y}Ga_yO_{3-w}, \quad La_{1-x}Sr_xFe_{1-y}Ti_yO_{3-w}, \quad La_{1-x}Sr_xFeO_{3-w}, \quad La_{1-u}Ca_uFe_{1-y}Ga_yO_{3-w},$$
$$La_{1-u}Ca_uFe_{1-y}Ti_yO_{3-w}, \quad La_{1-u}Ca_uFeO_{3-w}, \quad La_{1-u}Ba_uFe_{1-y}Ga_yO_{3-w}, \quad La_{1-u}Ba_uFe_{1-y}Ti_yO_{3-w}, \quad La_{1-u}Ba_uFeO_{3-w},$$
$$La_{1-x-u}Sr_xAl_uFe_{1-y}Ti_yO_{3-w}, \quad La_{1-x-u}Sr_xCa_uFe_{1-y}Ti_yO_{3-w}, \quad La_{1-x-u}Sr_xBa_uFe_{1-y}Ti_yO_{3-w},$$
$$La_{1-x-u}Sr_xAl_uFe_{1-y}Ga_yO_{3-w}, \quad La_{1-x-u}Sr_xCa_uFe_{1-y}Ga_yO_{3-w}, \quad La_{1-x-u}Sr_xBa_uFe_{1-y}Ga_yO_{3-w}, \quad La_{1-x}Sr_xFe_{1-y}Ti_yO_{3-w},$$
$$La_{1-x}Sr_xFe_{1-y}Al_yO_{3-w}, \quad La_{1-u}Ca_uFe_{1-y}Ti_yO_{3-w}, \quad La_{1-u}Ba_uFe_{1-y}Ti_yO_{3-w}, \quad La_{1-x}Sr_xFe_{1-y}Ga_yO_{3-w},$$
$$La_{1-u}Ca_uFe_{1-y}Ga_yO_{3-w}, \quad La_{1-u}Ba_uFe_{1-y}Ga_yO_{3-w}, \quad La_{1-u}Ba_uFeO_{3-w}, \quad La_{1-u}Ca_uFeO_{3-w} \text{ or } La_{1-x}Sr_xFeO_{3-w},$$

in which

- $0 < x \leq 0.5$;
- $0 < u \leq 0.5$;
- $(x + u) \leq 0.5$;
- $0 \leq y \leq 0.9$; and
- w is such that the structure in question is electrically neutral;

and more particularly those of formulae:

$$La_{0.6}Sr_{0.4}Fe_{0.9}Ga_{0.1}O_{3-w}, \quad La_{0.9}Sr_{0.1}Fe_{0.9}Ga_{0.1}O_{3-w}, \quad La_{0.7}Sr_{0.3}Fe_{0.7}Al_{0.3}O_{3-w},$$
$$La_{0.7}Sr_{0.3}Fe_{0.9}Ga_{0.1}O_{3-w}, \quad La_{0.8}Sr_{0.2}Fe_{0.7}Ga_{0.3}O_{3-w}, \quad La_{0.7}Sr_{0.3}Fe_{0.7}Ga_{0.3}O_{3-w}, \quad La_{0.5}Sr_{0.5}Fe_{0.9}Ti_{0.1}O_{3-w},$$
$$La_{0.9}Sr_{0.1}Fe_{0.9}Ti_{0.1}O_{3-w}, \quad La_{0.6}Sr_{0.4}Fe_{0.2}Co_{0.8}O_{3-w}, \quad La_{0.7}Sr_{0.3}FeO_{3-w} \text{ or } La_{0.9}Sr_{0.1}Fe_{0.2}Co_{0.8}O_{3-w}.$$

(ii) - optionally up to 25% by volume of a compound ($C_4$), which differs from compound ($C_3$), chosen from magnesium oxide (MgO), calcium oxide (CaO), aluminum oxide ($Al_2O_3$), zirconium oxide ($ZrO_2$), titanium oxide ($TiO_2$), strontium-aluminum mixed oxides $SrAl_2O_4$ or $Sr_3Al_2O_6$, barium-titanium mixed oxide ($BaTiO_3$), calcium-titanium mixed oxide ($CaTiO_3$), $La_{0.5}Sr_{0.5}Fe_{0.9}Ti_{0.1}O_{3-\omega}$ or $La_{0.6}Sr_{0.4}Fe_{0.9}Ga_{0.1}O_{3-\omega}$.; and

(iii) - optionally, up to 2.5% by volume of a compound ($C_{3-4}$) produced from at least one chemical reaction represented by the equation:

$$xF_{C3} + yF_{C4} \rightarrow zF_{C3-4},$$

in which equation $F_{C3}$, $F_{C4}$ and $F_{C3-4}$ represent the respective raw formulae of compounds ($C_3$), ($C_4$) and ($C_{3-4}$), and x, y and z represent rational numbers greater than or equal to 0;

**(c) and a catalytic layer ($C_{C1}$),** capable of promoting the reaction of partial oxidation of methane by gaseous oxygen to carbon monoxide and hydrogen, the said catalytic layer ($C_{C1}$), of thickness $E_{C1}$, having a volume porosity of between 20% and 80%, being adjacent to the said dense layer ($C_{D1}$) and consisting of a material ($A_{C1}$) comprising, per 100% of its volume:

(i) - at least 10% by volume and at most 100% by volume of a compound ($C_5$) chosen from doped ceramic oxides which, at the use temperature of between 600°C and 1 100°C, are in the form of a crystal lattice having oxide ion vacancies of perovskite phase, of formula (III): , in which compound ($C_5$) is chosen from compounds of formulae:

$$La_{1-x}Ce_xFe_{1-y-v}Ni_yRh_vO_{3-w}, \quad La_{1-x}Ce_xFe_{1-y}Ni_yO_{3-w}, \quad La_{1-x}Sr_xFe_{1-y-v}Ni_yRh_vO_{3-w} \quad \text{and}$$
$$La_{1-x}Sr_xFe_{1-y}Ni_yO_{3-w}$$

in which

- $0 < x \leq 0.5$;

- $0 \le y \le 0.9$;
- $0 \le v \le 0.9$;
- $0 \le (y + v) \le 0.9$; and
- w is such that the structure in question is electrically neutral;

and more particularly those of formulae:

$$La_{0.8}Ce_{0.2}Fe_{0.65}Ni_{0.30}Rh_{0.05}O_{3-w}, \qquad La_{0.8}Ce_{0.2}Fe_{0.7}Ni_{0.3}O_{3-w},$$
$$La_{0.8}Sr_{0.2}Fe_{0.65}Ni_{0.30}Rh_{0.05}O_{3-w}, \ La_{0.6}Sr_{0.4}Fe_{0.7}Ni_{0.3}O_{3-w} \ and \ La_{0.8}Sr_{0.2}Fe_{0.7}Ni_{0.3}O_{3-w};$$

(ii) - optionally up to 90% by volume of a compound $(C_6)$, which differs from compound $(C_5)$, chosen from nickel (Ni), iron (Fe), cobalt (Co), palladium (Pd), platinum (Pt), rhodium (Rh), ruthenium (Ru) or a mixture of these metals, optionally deposited on an oxide or non-oxide ceramic support, in an amount from 0.1% to 60% by weight of the said metal or of the mixture of metals, the said ceramic supports being chosen: <u>either from</u> boron oxide, aluminum oxide, cerium oxide, silicon oxide, titanium oxide, zirconium oxide, zinc oxide, magnesium oxide or calcium oxide, preferably from magnesium oxide (MgO), calcium oxide (CaO), aluminum oxide $(Al_2O_3)$, zirconium oxide $(ZrO_2)$, titanium oxide $(TiO_2)$ or ceria $(CeO_2)$; mullite $(2SiO_2.3Al_2O_3)$, cordierite $(Mg_2Al_4Si_5O_{18})$ or the spinel phase $MgAl_2O_4$; calcium-titanium mixed oxide $(CaTiO_3)$ or calcium-aluminum mixed oxide $(CaAl_{12}O_{19})$; hydroxylapatite $Ca_{10}(PO_4)_6(OH)_2$ or tricalcium phosphate $Ca_3(PO_4)_2$; $La_{0.5}Sr_{0.5}Fe_{0.9}Ti_{0.1}O_{3-\delta}$, $La_{0.6}Sr_{0.4}Fe_{0.9}Ga_{0.1}O_{3-\delta}$, $La_{0.5}Sr_{0.5}Fe_{0.9}Ga_{0.1}O_{3-\delta}$ or $La_{0.6}Sr_{0.4}Fe_{0.9}Ti_{0.1}O_{3-\delta}$, <u>or else from</u> materials of the non-oxide type, preferably chosen from silicon carbide (SiC), boron nitride (BN), aluminum nitride (AlN) or silicon nitride $(Si_3N_4)$, sialons (SiAlON);

(iii) - optionally up to 2.5% by volume of a compound $(C_{5-6})$ produced from at least one chemical reaction represented by the equation:

$$xF_{C5} + yF_{C6} \rightarrow zF_{C5-6},$$

in which equation $F_{C5}$, $F_{C6}$ and $F_{C5-6}$, represent the respective raw formulae of compounds $(C_5)$, $(C_6)$ and $(C_{5-6})$, and x, y and z represent rational numbers greater than or equal to 0;
so as to constitute an assembly $E_1$ consisting of three successive layers $\{(C_{C1}), (C_{D1}), (C_{P1})\}$, in which:

- at least one of the chemical elements actually present in compound $(C_1)$ is different from one of the chemical elements actually present in compound $(C_3)$.

2. Organized assembly based on superposed layers of materials of similar chemical nature, as defined in Claim 1, in which the volume proportions of compounds $(C_{1-2})$, $(C_{3-4})$ and $(C_{5-6})$ optionally present in the materials $(A_{D1})$, $(A_{P1})$ and $(A_{C1})$, respectively, tend towards 0.

3. Organized assembly based on superposed layers of materials of similar chemical nature, as defined in either of Claims 1 and 2, in which the volume proportions of compounds $(C_2)$, $(C_4)$ and $(C_6)$ optionally present in the materials $(A_{D1})$, $(A_{P1})$ and $(A_{C1})$, are greater than or equal to 0.1% and less than or equal to 10%.

4. Organized assembly based on superposed layers of materials of similar chemical nature, as defined in one of Claims 1 to 3, **characterized in that** it comprises:

(a) - **a dense layer $(C'_{D1})$** corresponding to the layer $(C_{D1})$ defined above and for which the material $(A_{D1})$ comprises, per 100% of its volume:

(i) - at least 95% by volume and at most 100% by volume of a compound $(C_1)$ chosen from compounds of formula:

$$La_{1-x-u}Sr_xAl_uFe_{1-y}Ti_yO_{3-w}, \quad La_{1-x-u}Sr_xCa_uFe_{1-y}Ti_yO_{3-w}, \quad La_{1-x-u}Sr_xBa_uFe_{1-y}Ti_yO_{3-w},$$
$$La_{1-x-u}Sr_xAl_uFe_{1-y}Ga_yO_{3-w}, La_{1-x-u}Sr_xCa_uFe_{1-y}Ga_yO_{3-w}, La_{1-x-u}Sr_xBa_uFe_{1-y}Ga_yO_{3-w}, La_{1-x}Sr_xFe_{1-y}Ti_yO_{3-w},$$
$$La_{1-x}Sr_xFe_{1-y}Ga_yO_{3-w}, La_{1-x-u}Sr_xCa_uFeO_{3-w}, La_{1-u}Ca_uFeO_{3-w} \ or \ La_{1-x}Sr_xFeO_{3-w},$$

in which:

- $0 < x \leq 0.5$;
- $0 < u \leq 0.5$;
- $(x + u) \leq 0.5$;
- $0 \leq y \leq 0.9$; and
- w is such that the structure in question is electrically neutral;

(ii) - optionally up to 5% by volume of a compound ($C_2$), which differs from compound ($C_1$), as defined above; and

(iii) - optionally up to 0.5% by volume of a compound ($C_{1-2}$) produced from at least one chemical reaction represented by the equation:

$$x F_{C1} + y F_{C2} \rightarrow z F_{C1-2},$$

in which equation $F_{C1}$, $F_{C2}$ and $F_{C1-2}$, represent the respective raw formulae of compounds ($C_1$), ($C_2$) and ($C_{1-2}$) and x, y and z represent rational numbers greater than or equal to 0;

**(b) - a porous layer ($C'_{P1}$)** corresponding to layer ($C_{P1}$) defined above, for which the material ($A_{P1}$) comprises, per 100% of its volume:

(i) - at least 95% by volume and at most 100% by volume of a compound ($C_3$) chosen from compounds of formula:

$$La_{1-x}Sr_xFe_{1-y}Ga_yO_{3-w}, \quad La_{1-x}Sr_xFe_{1-y}Ti_yO_{3-w}, \quad La_{1-x}Sr_xFeO_{3-w}, \quad La_{1-u}Ca_uFe_{1-y}Ga_yO_{3-w},$$
$$La_{1-u}Ca_uFe_{1-y}Ti_yO_{3-w}, \quad La_{1-u}Ca_uFeO_{3-w}, \quad La_{1-u}Ba_uFe_{1-y}Ga_yO_{3-w}, \quad La_{1-u}Ba_uFe_{1-y}Ti_yO_{3-w}, \quad La_{1-u}Ba_uFeO_{3-w},$$
$$La_{1-x-u}Sr_xAl_uFe_{1-y}Ti_yO_{3-w}, \quad La_{1-x-u}Sr_xCa_uFe_{1-y}Ti_yO_{3-w}, \quad La_{1-x-u}Sr_xBa_uFe_{1-y}Ti_yO_{3-w},$$
$$La_{1-x-u}Sr_xAl_uFe_{1-y}Ga_yO_{3-w}, \quad La_{1-x-u}Sr_xCa_uFe_{1-y}Ga_yO_{3-w}, \text{ or } La_{1-x-u}Sr_xBa_uFe_{1-y}Ga_yO_{3-w},$$

in which:

- $0 < x \leq 0.5$;
- $0 < u \leq 0.5$;
- $(x + u) \leq 0.5$;
- $0 \leq y \leq 0.9$;

and

- w is such that the structure in question is electrically neutral;

(ii) - optionally up to 5% by volume of a compound ($C_4$), which is different from compound ($C_3$), as defined above; and

(iii) - optionally up to 0.5% by volume of a compound ($C_{3-4}$) produced from at least one chemical reaction represented by the equation:

$$x F_{C3} + y F_{C4} \rightarrow z F_{C3-4},$$

in which equation $F_{C3}$, $F_{C4}$ and $F_{C3-4}$, represent the respective raw formulae of compounds ($C_3$), ($C_4$) and ($C_{3-4}$) and x, y and z represent rational numbers greater than or equal to 0;

**(c) - and a catalytic layer ($C'_{C1}$)** corresponding to layer ($C_{C1}$) defined above, for which the material ($A_{C1}$) comprises, per 100% of its volume:

(i) - at least 95% by volume and at most 100% by volume of a compound ($C_5$) chosen from compounds of formula:

$La_{1-x}Ce_xFe_{1-y-v}Ni_yRh_vO_{3-w}$, $La_{1-x}Ce_xFe_{1-y}Ni_yO_{3-w}$, $La_{1-x}Sr_xFe_{1-y-v}Ni_yRh_vO_{3-w}$, $La_{0.6}Sr_{0.4}Fe_{0.70}Ni_{0.30}O_{3-w}$ and $La_{1-x}Sr_xFe_{1-y}Ni_yO_{3-w}$,

in which:

- $0 < x \leq 0.5$;
- $0 \leq y \leq 0.7$;
- $0 \leq v \leq 0.5$;
- $0 \leq (y + v) \leq 0.8$; and
- w is such that the structure in question is electrically neutral;

(ii) - optionally up to 5% by volume of a compound ($C_6$), which is different from compound ($C_5$), as defined above; and

(iii) - optionally up to 0.5% by volume of a compound ($C_{5-6}$) produced from at least one chemical reaction represented by the equation:

$$xF_{C5} + yF_{C6} \rightarrow zF_{C5\text{-}6},$$

in which equation $F_{C5}$, $F_{C6}$ and $F_{C5-6}$, represent the respective raw formulae of compounds ($C_5$), ($C_6$) and ($C_{5-6}$) and x, y and z represent rational numbers greater to or equal to 0;

5. Organized assembly based on superposed layers of materials of similar chemical nature, as defined in Claim 4, **characterized in that** it comprises:

**(a) - a dense layer ($C''_{D1}$)** corresponding to layer ($C'_{D1}$) defined above and for which the material ($A_D$) comprises, per 100% of its volume:

(i) - at least 95% by volume and at most 100% by volume of a compound ($C_1$) chosen from compounds of formula $La_{0.6}Sr_{0.4}Fe_{0.9}Ga_{0.1}O_{3-w}$, $La_{0.7}Sr_{0.3}Fe_{0.9}Ga_{0.1}O_{3-w}$ $La_{0.5}Sr_{0.2}Fe_{0.7}Ga_{0.3}O_{3-w}$, $La_{0.7}Sr_{0.3}Fe_{0.7}Ga_{0.3}O_{3-w}$ or $La_{0.5}Sr_{0.5}Fe_{0.9}Ti_{0.1}O_{3-w}$ ;

(ii) - optionally up to 5% by volume of a compound ($C_2$), which differs from compound ($C_1$), as defined above; and

(iii) - optionally up to 0.5% by volume of a compound ($C_{1-2}$) produced from at least one chemical reaction represented by the equation:

$$xF_{C1} + yF_{C2} \rightarrow zF_{C1\text{-}2},$$

in which equation $F_{C1}$, $F_{C2}$ and $F_{C1-2}$, represent the respective raw formulae of compounds ($C_1$), ($C_2$) and ($C_{1-2}$) and x, y and z represent rational numbers greater than or equal to 0;

**(b) - a porous layer ($C''_{P1}$)** corresponding to layer ($C'_{P1}$) defined above for which the material ($A_{P1}$) comprises, per 100% of its volume:

(i) - at least 95% by volume and at most 100% by volume of a compound ($C_3$) chosen from compounds of formula:

$La_{0.6}Sr_{0.4}Fe_{0.9}Ga_{0.1}O_{3-w}$, $La_{0.9}Sr_{0.1}Fe_{0.9}Ga_{0.1}O_{3-w}$, $La_{0.5}Sr_{0.5}Fe_{0.9}Ti_{0.1}O_{3-w}$, $La_{0.9}Sr_{0.1}Fe_{0.9}Ti_{0.1}O_{3-w}$, $La_{0.6}Sr_{0.4}Fe_{0.2}Co_{0.8}O_{3-w}$ or $La_{0.9}Sr_{0.1}Fe_{0.2}Co_{0.8}O_{3-w}$, $La_{0.7}Sr_{0.3}Fe_{0.9}Ga_{0.1}O_{3-w}$, $La_{0.8}Sr_{0.2}Fe_{0.7}Ga_{0.3}O_{3-w}$ $La_{0.7}Sr_{0.3}Fe_{0.7}Ga_{0.3}O_{3-w}$;

(ii) - optionally up to 5% by volume of a compound ($C_4$), which differs from compound ($C_3$), as defined above; and

(iii) - optionally up to 0.5% by volume of a compound ($C_{3-4}$) produced from at least one chemical reaction represented by the equation:

$$xF_{C3} + yF_{C4} \rightarrow zF_{C3\text{-}4},$$

in which equation $F_{C3}$, $F_{C4}$ and $F_{C3\text{-}4}$, represent the respective raw formulae of compounds $(C_3)$, $(C_4)$ and $(C_{3\text{-}4})$ and x, y and z represent rational numbers greater than or equal to 0;

**(c) - and a catalytic layer (C"$_{C1}$)** corresponding to layer (C'$_{C1}$) defined above, for which the material $(A_{C1})$ comprises, per 100% of its volume:

(i) - at least 95% by volume and at most 100% by volume of a compound $(C_5)$ chosen from compounds of formula, $La_{0.8}Ce_{0.2}Fe_{0.65}Ni_{0.30}Rh_{0.05}O_{3\text{-}w}$, $La_{0.8}Ce_{0.2}Fe_{0.7}Ni_{0.3}O_{3\text{-}w}$, $La_{0.8}Sr_{0.2}Fe_{0.65}Ni_{0.30}Rh_{0.05}O_{3\text{-}w}$, $La_{0.6}Sr_{0.4}Fe_{0.70}Ni_{0.30}O_{3\text{-}w}$ and $La_{0.8}Sr_{0.2}Fe_{0.7}Ni_{0.3}O_{3\text{-}w}$;

(ii) - optionally up to 5% by volume of a compound $(C_6)$, which differs from compound $(C_5)$, as defined above; and

(iii) - optionally up to 0.5% by volume of a compound $(C_{5\text{-}6})$ produced from at least one chemical reaction represented by the equation:

$$xF_{C5} + yF_{C6} \rightarrow zF_{C5\text{-}6},$$

in which equation $F_{C5}$, $F_{C6}$ and $F_{C5\text{-}6}$, represent the respective raw formulae of compounds $(C_5)$, $(C_6)$ and $(C_{5\text{-}6})$ and x, y and z represent rational numbers of greater than or equal to 0;

6. Reactor of non zero internal volume V, intended for the production of synthesis gas by the oxidation of natural gas, **characterized in that** it comprises <u>either</u> an organized assembly of tubular form, based on superposed layers of materials of similar chemical nature, as defined in one of Claims 1 to 5, in which the catalytic layer $(C_{C1})$, capable of promoting the reaction of methanoxidation by gaseous oxygen to carbon monoxide, is located on the external surface of the said assembly of tubular form closed at one of its ends, <u>or</u> a combination of several of said assemblies of tubular form that are mounted in parallel, wherein the free volume $V_f$ inside the reactor is greater than or equal to 0.25V and is preferably greater than or equal to 0.5V.

7. Reactor as defined in Claim 6, in which a non-zero fraction of the volume $V_f$ contains a steam-reforming catalyst.

**Patentansprüche**

1. Organisierte Anordnung, basierend auf überlagernden Schichten aus Materialien mit ähnlicher chemischer Natur, **dadurch gekennzeichnet, dass** sie Folgende umfasst:

**(a) - eine dichte Schicht (C$_{D1}$)** mit einer Dicke $E_{D1}$, deren Porosität 5 Vol.-% nicht übersteigt, wobei diese dichte Schicht (C$_{D1}$) aus einem Material $(A_D1)$ besteht, das bei 100 Vol.-% Folgendes umfasst:

(i) - mindestens 75 Vol.-% und höchstens 100 Vol.-% einer Verbindung $(C_1)$, ausgewählt aus dotierten Keramikoxiden, die bei der Anwendungstemperatur zwischen 600 °C und 1100 °C in Form eines Kristallgitters der Perowskit-Phase mit Sauerstoffionen-Fehlstellen vorliegen, mit den folgenden Formeln:

$La_{1\text{-}x\text{-}u}Sr_xAl_uFe_{1\text{-}y}Ti_yO_{3\text{-}w}$, $La_{1\text{-}x\text{-}u}Sr_xCa_uFe_{1\text{-}y}Ti_yO_{3\text{-}w}$, $La_{1\text{-}x\text{-}u}Sr_xBa_uFe_{1\text{-}y}Ti_yO_{3\text{-}w}$, $La_{1\text{-}x\text{-}u}Sr_xAl_uFe_{1\text{-}y}Ga_yO_{3\text{-}w}$, $La_{1\text{-}x\text{-}u}Sr_xCa_uFe_{1\text{-}y}Ga_yO_{3\text{-}w}$, $La_{1\text{-}x\text{-}u}Sr_xBa_uFe_{1\text{-}y}Ga_yO_{3\text{-}w}$, $La_{1\text{-}x}Sr_xFe_{1\text{-}y}Ti_yO_{3\text{-}w}$, $La_{1\text{-}x}Sr_xFe_{1\text{-}y}Ga_yO_{3\text{-}w}$, $La_{1\text{-}x\text{-}u}Sr_xCa_uFeO_{3\text{-}w}$, $La_{1\text{-}u}Ca_uFeO_{3\text{-}w}$ oder $La_{1\text{-}x}Sr_xFeO_{3\text{-}w}$,

in denen

- $0 < x \leq 0,5$,
- $0 < u \leq 0,5$,
- $(x + u) \leq 0,5$,
- $0 \leq y \leq 0,9$, und

- w so ist, dass die fragliche Struktur elektrisch neutral ist; und insbesondere solche der Formeln:

$$La_{0,6}Sr_{0,4}Fe_{0,9}Ga_{0,1}O_{3-W}, \quad La_{0,7}Sr_{0,3}Fe_{0,9}Ga_{0,1}O_{3-w}, \quad La_{0,8}Sr_{0,2}Fe_{0,7}Ga_{0,3}O_{3-w},$$

$La_{0,7}Sr_{0,3}Fe_{0,7}Ga_{0,3}O_{3-w}$ oder $La_{0,5}Sr_{0,5}Fe_{0,9}Ti_{0,1}O_{3-w}$,

(ii) - gegebenenfalls bis zu 25 Vol.-% einer Verbindung ($C_2$), die sich von der Verbindung ($C_1$) unterscheidet, ausgewählt aus Magnesiumoxid (MgO), Calciumoxid (CaO), Aluminiumoxid ($Al_2O_3$), Zirkoniumoxid ($ZrO_2$), Titanoxid ($TiO_2$), gemischten Strontium-Aluminium-Oxiden $SrAl_2O_4$ oder $Sr_3Al_2O_6$, gemischtem Barium-Titan-Oxid ($BaTiO_3$), gemischtem Calcium-Titan-Oxid ($CaTiO_3$), $La_{0,5}Sr_{0,5}Fe_{0,9}Ti_{0,1}O_{3-\omega}$ oder $La_{0,6}Sr_{0,4}Fe_{0,9}Ga_{0,1}O_{3-\omega}$, und

(iii) - gegebenenfalls bis zu 2,5 Vol.-% einer Verbindung ($C_{1-2}$), die aus mindestens einer chemischen Reaktion hergestellt wird, die durch die folgende Formel dargestellt ist:

$$xF_{C1} + yF_{C2} \rightarrow zF_{C1-2},$$

wobei $F_{C1}$, $F_{C2}$ und $F_{C1-2}$ in dieser Gleichung die jeweiligen rohen Formeln der Verbindungen ($C_1$), ($C_2$) und ($C_{1-2}$) darstellen und x, y und z rationale Zahlen größer oder gleich 0 darstellen,

**(b) - eine poröse Schicht ($C_{P1}$)** mit einer Dicke $E_{P1}$, deren Volumenporosität zwischen 20 % und 80 % beträgt, benachbart dieser dichten Schicht ($C_{D1}$), wobei diese poröse Schicht ($C_{P1}$) aus einem Material ($A_{P1}$) besteht, das bei 100 Vol.-% Folgendes umfasst:

(i) - mindestens 75 Vol.-% und höchstens 100 Vol.-% einer Verbindung ($C_3$), ausgewählt aus dotierten Keramikoxiden, die bei der Anwendungstemperatur zwischen 600 °C und 1100 °C in Form eines Kristallgitters der Perowskit-Phase mit Sauerstoffionen-Fehlstellen vorliegen, mit den folgenden Formeln:

$$La_{1-x}Sr_xFe_{1-y}Ga_yO_{3-w}, \ La_{1-x}Sr_xFe_{1-y}Ti_yO_{3-w}, \ La_{1-x}Sr_xFeO_{3-W}, \ La_{1-u}Ca_uFe_{1-y}Ga_yO_{3-w},$$

$La_{1-u}Ca_uFe_{1-y}Ti_yO_{3-w}$, $La_{1-u}Ca_uFeO_{3-w}$, $La_{1-u}Ba_uFe_{1-y}Ga_yO_{3-w}$, $La_{1-u}Ba_uFe_{1-y}Ti_yO_{3-w}$, $La_{1-u}Ba_uFeO_{3-w}$, $La_{1-x-u}Sr_xAl_uFe_{1-y}Ti_yO_{3-w}$, $La_{1-x-u}Sr_xCa_uFe_{1-y}Ti_yO_{3-w}$, $La_{1-x-u}Sr_xBa_uFe_{1-y}Ti_yO_{3-w}$, $La_{1-x-u}Sr_xAl_uFe_{1-y}Ga_yO_{3-w}$, $La_{1-x-u}Sr_xCa_uFe_{1-y}Ga_yO_{3-w}$, $La_{1-x-u}Sr_xBa_uFe_{1-y}Ga_yO_{3-w}$, $La_{1-x}Sr_xFe_{1-y}Ti_yO_{3-w}$, $La_{1-x}Sr_xFe_{1-y}Al_yO_{3-w}$, $La_{1-u}Ca_uFe_{1-y}Ti_yO_{3-w}$, $La_{1-u}Ba_uFe_{1-y}Ti_yO_{3-w}$, $La_{1-x}Sr_xFe_{1-y}Ga_yO_{3-w}$, $La_{1-u}Ca_uFe_{1-y}Ga_yO_{3-w}$, $La_{1-u}Ba_uFe_{1-y}Ga_yO_{3-w}$, $La_{1-u}Ba_uFeO_{3-w}$, $La_{1-u}Ca_uFeO_{3-w}$ oder $La_{1-x}Sr_xFeO_{3-w}$,

in denen

- $0 < x \leq 0,5$,
- $0 < u \leq 0,5$,
- $(x + u) \leq 0,5$,
- $0 \leq y \leq 9$, und
- w so ist, dass die fragliche Struktur elektrisch neutral ist; und insbesondere solche der Formeln:

$$La_{0,6}Sr_{0,4}Fe_{0,9}Ga_{0,1}O_{3-w}, \ La_{0,9}Sr_{0,1}Fe_{0,9}Ga_{0,1}O_{3-w}, \ La_{0,7}Sr_{0,3}Fe_{0,7}Al_{0,3}O_{3-w},$$

$$La_{0,7}Sr_{0,3}Fe_{0,9}Ga_{0,1}O_{3-w}, \quad La_{0,8}Sr_{0,2}Fe_{0,7}Ga_{0,3}O_{3-w}, \quad La_{0,7}Sr_{0,3}Fe_{0,7}Ga_{0,3}O_{3-w},$$

$La_{0,5}Sr_{0,5}Fe_{0,9}Ti_{0,1}O_{3-w}$, $La_{0,9}Sr_{0,1}Fe_{0,9}Ti_{0,1}O_{3-w}$, $La_{0,6}Sr_{0,4}Fe_{0,2}Co_{0,8}O_{3-w}$, $La_{0,7}Sr_{0,3}FeO_{3-w}$ oder $La_{0,9}Sr_{0,1}Fe_{0,2}Co_{0,8}O_{3-w}$.

(ii) - gegebenenfalls bis zu 25 Vol.-% einer Verbindung ($C_4$), die sich von der Verbindung ($C_3$) unterscheidet, ausgewählt aus Magnesiumoxid (MgO), Calciumoxid (CaO), Aluminiumoxid ($Al_2O_3$), Zirkoniumoxid ($ZrO_2$), Titanoxid ($TiO_2$), gemischten Strontium-Aluminium-Oxiden $SrAl_2O_4$ oder $Sr_3Al_2O_6$, gemischtem Barium-Titan-Oxid ($BaTiO_3$), gemischtem Calcium-Titan-Oxid ($CaTiO_3$), $La_{0,5}Sr_{0,5}Fe_{0,9}Ti_{0,1}O_{3-\omega}$ oder $La_{0,6}Sr_{0,4}Fe_{0,9}Ga_{0,1}O_{3-\omega}$, und

(iii) - gegebenenfalls bis zu 2,5 Vol.-% einer Verbindung ($C_{3-4}$), die aus mindestens einer chemischen Reaktion hergestellt wird, die durch die folgende Formel dargestellt ist:

$$xF_{C3} + yF_{C4} \rightarrow zF_{C3\text{-}4},$$

wobei $F_{C3}$, $F_{C4}$ und $F_{C3\text{-}4}$ in dieser Gleichung die jeweiligen rohen Formeln der Verbindungen $(C_3)$, $(C_4)$ und $(C_{3\text{-}4})$ darstellen und x, y und z rationale Zahlen größer oder gleich 0 darstellen,

**(c) und eine katalytische Schicht $(C_{C1})$**, die die Reaktion der partiellen Oxidation von Methan durch gasförmigen Sauerstoff zu Kohlenstoffmonoxid und Wasserstoff begünstigen kann, wobei diese katalytische Schicht $(C_{C1})$ der Dicke $E_{C1}$ eine Volumenporosität zwischen 20 % und 80 % aufweist und benachbart zu der dichten Schicht $(C_{D1})$ liegt und aus einem Material $(A_{C1})$ besteht, das bei 100 Vol.-% Folgendes umfasst:

(i) - mindestens 10 Vol.-% und höchstens 100 Vol.-% einer Verbindung $(C_5)$, ausgewählt aus dotierten Keramikoxiden, die bei der Anwendungstemperatur zwischen 600 °C und 1100 °C in Form eines Kristallgitters der Perowskit-Phase mit Sauerstoffionen-Fehlstellen vorliegen, mit der folgenden Formel (III):, wobei diese Verbindung $(C_5)$ aus den Verbindungen mit den folgenden Formeln ausgewählt ist:

$$La_{1-x}Ce_xFe_{1-y-v}Ni_yRh_vO_{3-w}, \quad La_{1-x}Ce_xFe_{1-y}Ni_yO_{3-w}, \quad La_{1-x}Sr_xFe_{1-y-v}Ni_yRh_vO_{3-w} \quad \text{und}$$
$$La_{1-x}Sr_xFe_{1-y}Ni_yO_{3-w}$$

in denen

-0 < x ≤ 0,5,
- 0 < y ≤ 0,9,
- 0 < v ≤ 0,9,
- 0 ≤ (y + v) ≤ 0,9, und
- w so ist, dass die fragliche Struktur elektrisch neutral ist; und insbesondere solche der Formeln:

$$La_{0,8}Ce_{0,2}Fe_{0,65}Ni_{0,30}Rh_{0,05}O_{3-w}, \quad La_{0,8}Ce_{0,2}Fe_{0,7}Ni_{0,3}O_{3-w},$$
$$La_{0,8}Sr_{0,2}Fe_{0,65}Ni_{0,30}Rh_{0,05}O_{3-w}, \quad La_{0,6}Sr_{0,4}Fe_{0,7}Ni_{0,3}O_{3-w} \quad \text{und} \quad La_{0,8}Sr_{0,2}Fe_{0,7}Ni_{0,3}O_{3-w},$$

(ii) - gegebenenfalls bis zu 90 Vol.-% einer Verbindung $(C_6)$, die sich von der Verbindung $(C_5)$ unterscheidet und aus Nickel (Ni), Eisen (Fe), Cobalt (Co), Palladium (Pd), Platin (Pt), Rhodium (Rh), Ruthenium (Ru) oder einer Mischung dieser Metalle ausgewählt ist, die gegebenenfalls in einer Menge von 0,1 bis 60 Gew.-% dieses Metalls oder dieser Metallmischung auf einem oxidischen oder nicht oxidischen Keramikträger abgeschieden sind, wobei die keramischen Träger aus Folgenden ausgewählt sind: entweder aus Boroxid, Aluminiumoxid, Ceroxid, Siliciumoxid, Titanoxid, Zirkoniumoxid, Zinkoxid, Magnesiumoxid oder Calciumoxid, vorzugsweise aus Magnesiumoxid (MgO), Calciumoxid (CaO), Aluminiumoxid ($Al_2O_3$), Zirkoniumoxid ($ZrO_2$), Titanoxid ($TiO_2$) oder Ceroxid ($CeO_2$), Mullit ($2SiO_2 \cdot 3Al_2O_3$), Cordierit ($Mg_2Al_4Si_5O_{18}$) oder der Spinellphase $MgAl_2O_4$, gemischtem Calcium-Titan-Oxid ($CaTiO_3$) oder gemischtem Calcium-Aluminium-Oxid ($CaAl_{12}O_{19}$), Hydroxylapatit $Ca_{10}(PO_4)_6(OH)_2$ oder Tricalciumphosphat $Ca_3(PO_4)_2$, $La_{0,5}Sr_{0,5}Fe_{0,9}Ti_{0,1}O_{3-\delta}$, $La_{0,6}Sr_{0,4}Fe_{0,9}Ga_{0,1}O_{3-\delta}$, $La_{0,5}Sr_{0,5}Fe_{0,9}Ga_{0,1}O_{3-\delta}$ oder $La_{0,6}Sr_{0,4}Fe_{0,9}Ti_{0,1}O_{3-\delta}$, oder auch aus Materialien vom nicht oxidischen Typ, vorzugsweise ausgewählt aus Siliciumcarbid (SiC), Bornitrid (BN), Aluminiumnitrid (AlN) oder Siliciumnitrid ($Si_3N_4$), Sialonen (SiAlON),
(iii) - gegebenenfalls bis zu 2,5 Vol.-% einer Verbindung $(C_{5\text{-}6})$, die aus mindestens einer chemischen Reaktion hergestellt wird, die durch die folgende Formel dargestellt ist:

$$xF_{C5} + yF_{C6} \rightarrow zF_{C5\text{-}6},$$

wobei $F_{C5}$, $F_{C6}$ und $F_{C5\text{-}6}$ in dieser Gleichung die jeweiligen rohen Formeln der Verbindungen $(C_5)$, $(C_6)$ und $(C_{5\text{-}6})$ darstellen und x, y und z rationale Zahlen größer oder gleich 0 darstellen,
um so eine Anordnung $E_1$ aufzubauen, die aus drei aufeinanderfolgenden Schichten $\{(C_{C1}), (C_{D1}), (C_{P1})\}$ besteht, in denen:

- mindestens eines der tatsächlich in der Verbindung ($C_1$) vorhandenen chemischen Elemente sich von einem der tatsächlich in der Verbindung ($C_3$) vorhandenen chemischen Elemente unterscheidet.

2. Organisierte Anordnung, basierend auf überlagernden Schichten aus Materialien mit ähnlicher chemischer Natur nach Anspruch 1, bei der die Volumenanteile der Verbindungen ($C_{1-2}$), ($C_{3-4}$) und ($C_{5-6}$), die gegebenenfalls in den Materialien ($A_{D1}$), ($A_{P1}$) bzw. ($A_{C1}$) vorhanden sind, gegen 0 gehen.

3. Organisierte Anordnung, basierend auf überlagernden Schichten aus Materialien mit ähnlicher chemischer Natur nach einem der Ansprüche 1 oder 2, bei der die Volumenanteile der Verbindungen ($C_2$), ($C_4$) und ($C_6$), die gegebenenfalls in den Materialien ($A_{D1}$), ($A_{P1}$) und ($A_{C1}$) vorhanden sind, größer oder gleich 0,1 % und weniger oder gleich 10 % sind.

4. Organisierte Anordnung, basierend auf überlagernden Schichten aus Materialien mit ähnlicher chemischer Natur nach einem der Ansprüche 1 bis 3, **dadurch gekennzeichnet, dass** diese umfasst:

   (a) - **eine dichte Schicht ($C'_{D1}$)** entsprechend der oben definierten Schicht ($C_{D1}$) und bei der das Material ($A_{D1}$) bei 100 Vol.-% Folgendes umfasst:

   (i) - mindestens 95 Vol.-% und höchstens 100 Vol.-% einer Verbindung ($C_1$), ausgewählt aus Verbindungen mit den folgenden Formeln:

   $$La_{1-x-u}Sr_xAl_uFe_{1-y}Ti_yO_{3-w}, \quad La_{1-x-u}Sr_xCa_uFe_{1-y}Ti_yO_{3-w}, \quad La_{1-x-u}Sr_xBa_uFe_{1-y}Ti_yO_{3-w},$$
   $$La_{1-x-u}Sr_xAl_uFe_{1-y}Ga_yO_{3-w}, La_{1-x-u}Sr_xCa_uFe_{1-y}Ga_yO_{3-w}, La_{1-x-u}Sr_xBa_uFe_{1-y}Ga_yO_{3-w}, La_{1-x}Sr_xFe_{1-y}Ti_yO_{3-w},$$
   $$La_{1-x-u}Sr_xFe_{1-y}Ga_yO_{3-w}, La_{1-x-u}Sr_xCa_uFeO_{3-w}, La_{1-u}Ca_uFeO_{3-w} \text{ oder } La_{1-x}Sr_xFeO_{3-w},$$

   in denen:

   - $0 < x \leq 0{,}5$,
   - $0 < u \leq 0{,}5$,
   - $(x + u) \leq 0{,}5$,
   - $0 \leq y \leq 0{,}9$, und
   - w so ist, dass die fragliche Struktur elektrisch neutral ist,

   (ii) - gegebenenfalls bis zu 5 Vol.-% einer Verbindung ($C_2$), die sich von Verbindung ($C_1$) wie oben definiert unterscheidet, und
   (iii) - gegebenenfalls bis zu 0,5 Vol.-% einer Verbindung ($C_{1-2}$), die aus mindestens einer chemischen Reaktion hergestellt wird, die durch die folgende Formel dargestellt ist:

   $$xF_{C1} + yF_{C2} \rightarrow zF_{C1-2},$$

   wobei $F_{C1}$, $F_{C2}$ und $F_{C1-2}$ in dieser Gleichung die jeweiligen rohen Formeln der Verbindungen ($C_1$), ($C_2$) und ($C_{1-2}$) darstellen und x, y und z rationale Zahlen größer oder gleich 0 darstellen,

   (b) - **eine poröse Schicht ($C'P1$)** entsprechend der oben definierten Schicht ($C_{P1}$), bei der das Material ($A_{P1}$) bei 100 Vol.-% Folgendes umfasst:

   (i) - mindestens 95 Vol.-% und höchstens 100 Vol.-% einer Verbindung ($C_3$), ausgewählt aus Verbindungen mit den folgenden Formeln:

   $$La_{1-x}Sr_xFe_{1-y}Ga_yO_{3-w}, \quad La_{1-x}Sr_xFe_{1-y}Ti_yO_{3-w}, \quad La_{1-x}Sr_xFeO_{3-W}, \quad La_{1-u}Ca_uFe_{1-y}Ga_yO_{3-w},$$
   $$La_{1-u}Ca_uFe_{1-y}Ti_yO_{3-w}, \quad La_{1-u}Ca_uFeO_{3-w}, \quad La_{1-u}Ba_uFe_{1-y}Ga_yO_{3-w}, \quad La_{1-u}Ba_uFe_{1-y}Ti_yO_{3-w}, \quad La_{1-u}Ba_uFeO_{3-w},$$
   $$La_{1-x-u}Sr_xAl_uFe_{1-y}Ti_yO_{3-w}, \qquad La_{1-x-u}Sr_xCa_uFe_{1-y}Ti_yO_{3-w}, \qquad La_{1-x-u}Sr_xBa_uFe_{1-y}Ti_yO_{3-w},$$
   $$La_{1-x-u}Sr_xAl_uFe_{1-y}Ga_yO_{3-w}, La_{1-x-u}Sr_xCa_uFe_{1-y}Ga_yO_{3-w} \text{ oder } La_{1-x-u}Sr_xBa_uFe_{1-y}Ga_yO_{3-w},$$

   in denen:

- $0 < x \leq 0,5$,
- $0 < u \leq 0,5$,
- $(x + u) \leq 0,5$,
- $0 \leq y \leq 0,9$,

und

- w so ist, dass die fragliche Struktur elektrisch neutral ist,

(ii) - gegebenenfalls bis zu 5 Vol.-% einer Verbindung ($C_4$), die sich von Verbindung ($C_3$) wie oben definiert unterscheidet, und

(iii) - gegebenenfalls bis zu 0,5 Vol.-% einer Verbindung ($C_{3-4}$), die aus mindestens einer chemischen Reaktion hergestellt wird, die durch die folgende Formel dargestellt ist:

$$xF_{C3} + yF_{C4} \rightarrow zF_{C3-4},$$

wobei $F_{C3}$, $F_{C4}$ und $F_{C3-4}$ in dieser Gleichung die jeweiligen rohen Formeln der Verbindungen ($C_3$), ($C_4$) und ($C_{3-4}$) darstellen und x, y und z rationale Zahlen größer oder gleich 0 darstellen,

**(c) - und eine katalytische Schicht ($C'_{C1}$)** entsprechend der oben definierten Schicht ($C_{C1}$), bei der das Material ($A_{C1}$) bei 100 Vol.-% Folgendes umfasst:

(i) - mindestens 95 Vol.-% und höchstens 100 Vol.-% einer Verbindung ($C_5$), ausgewählt aus Verbindungen mit den folgenden Formeln:

$$La_{1-x}Ce_xFe_{1-y-v}Ni_yRh_vO_{3-w}, \qquad La_{1-x}Ce_xFe_{1-y}Ni_yO_{3-w}, \qquad La_{i1-x}Sr_xFe_{1-y-v}Ni_yRh_vO_{3-w},$$
$$La_{0,6}Sr_{0,4}Fe_{0,70}Ni_{0,30}O_{3-w} \text{ und } La_{1-x}Sr_xFe_{1-y}Ni_yO_{3-w}$$

in denen:

- $0 < x \leq 0,5$,
- $0 \leq y \leq 0,7$,
- $0 \leq y \leq 0,5$,
- $0 \leq (y + v) \leq 0,8$, und
- w so ist, dass die fragliche Struktur elektrisch neutral ist,

(ii) - gegebenenfalls bis zu 5 Vol.-% einer Verbindung ($C_6$), die sich von Verbindung ($C_5$) wie oben definiert unterscheidet, und

(iii) - gegebenenfalls bis zu 0,5 Vol.-% einer Verbindung ($C_{5-6}$), die aus mindestens einer chemischen Reaktion hergestellt wird, die durch die folgende Formel dargestellt ist:

$$xF_{C5} + yF_{C6} \rightarrow zF_{C5-6},$$

wobei $F_{C5}$, $F_{C6}$ und $F_{C5-6}$ in dieser Gleichung die jeweiligen rohen Formeln der Verbindungen ($C_5$), ($C_6$) und ($C_{5-6}$) darstellen und x, y und z rationale Zahlen größer oder gleich 0 darstellen.

**5.** Organisierte Anordnung, basierend auf überlagernden Schichten aus Materialien mit ähnlicher chemischer Natur nach Anspruch 4, **dadurch gekennzeichnet, dass** diese umfasst:

**(a) - eine dichte Schicht ($C''_{D1}$)** entsprechend der oben definierten Schicht ($C'_{D1}$) und bei der das Material ($A_{D1}$) pro 100 Vol.% Folgendes umfasst:

(i) - mindestens 95 Vol.-% und höchstens 100 Vol.-% einer Verbindung ($C_1$), ausgewählt aus Verbindungen mit den folgenden Formeln $La_{0,6}Sr_{0,4}Fe_{0,9}Ga_{0,1}O_{3-w}$, $La_{0,7}Sr_{0,3}Fe_{0,9}Ga_{0,1}O_{3-w}$, $La_{0,8}Sr_{0,2}Fe_{0,7}Ga_{0}O_{3-w}$,

$La_{0,7}Sr_{0,3}Fe_{0,7}Ga_{0,3}O_{3-w}$ oder $La_{0,5}Sr_{0,5}Fe_{0,9}Ti_{0,1}O_{3-w}$,

(ii) - gegebenenfalls bis zu 5 Vol.-% einer Verbindung ($C_2$), die sich von Verbindung ($C_1$) wie oben definiert unterscheidet, und

(iii) - gegebenenfalls bis zu 0,5 Vol.-% einer Verbindung ($C_{1-2}$), die aus mindestens einer chemischen Reaktion hergestellt wird, die durch die folgende Formel dargestellt ist:

$$xF_{C1} + yF_{C2} \rightarrow zF_{C1-2},$$

wobei $F_{C1}$, $F_{C2}$ und $F_{C1-2}$ in dieser Gleichung die jeweiligen rohen Formeln der Verbindungen ($C_1$), ($C_2$) und ($C_{1-2}$) darstellen und x, y und z rationale Zahlen größer oder gleich 0 darstellen,

**(b) - eine poröse Schicht (C''$_{P1}$)** entsprechend der oben definierten Schicht (C'$_{P1}$), bei der das Material ($A_{P1}$) pro 100 Vol.-% Folgendes umfasst:

(i) - mindestens 95 Vol.-% und höchstens 100 Vol.-% einer Verbindung ($C_3$), ausgewählt aus Verbindungen mit den folgenden Formeln:

$La_{0,6}Sr_{0,4}Fe_{0,9}Ga_{0,1}O_{3-w}$,  $La_{0,9}Sr_{0,1}Fe_{0,9}Ga_{0,1}O_{3-w}$,  $La_{0,5}Sr_{0,5}Fe_{0,9}Ti_{0,1}O_{3-w}$, $La_{0,9}Sr_{0,1}Fe_{0,9}Ti_{0,1}O_{3-w}$,  $La_{0,6}Sr_{0,4}Fe_{0,2}Co_{0,8}O_{3-w}$  oder  $La_{0,9}Sr_{0,1}Fe_{0,2}Co_{0,8}O_{3-w}$, $La_{0,7}Sr_{0,3}Fe_{0,9}Ga_{0,1}O_{3-w}$, $La_{0,8}Sr_{0,2}Fe_{0,7}Ga_{0,3}O_{3-w}$ $La_{0,7}Sr_{0,3}Fe_{0,7}Ga_{0,3}O_{3-w}$,

(ii) - gegebenenfalls bis zu 5 Vol.-% einer Verbindung ($C_4$), die sich von Verbindung ($C_3$) wie oben definiert unterscheidet, und

(iii) - gegebenenfalls bis zu 0,5 Vol.-% einer Verbindung ($C_{3-4}$), die aus mindestens einer chemischen Reaktion hergestellt wird, die durch die folgende Formel dargestellt ist:

$$xF_{C3} + yF_{C4} \rightarrow zF_{C3-4},$$

wobei $F_{C3}$, $F_{C4}$ und $F_{C3-4}$ in dieser Gleichung die jeweiligen rohen Formeln der Verbindungen ($C_3$), ($C_4$) und ($C_{3-4}$) darstellen und x, y und z rationale Zahlen größer oder gleich 0 darstellen,

**(c) - und eine katalytische Schicht (C''$_{C1}$)** entsprechend der oben definierten Schicht (C'$_{C1}$), bei der das Material ($A_{C1}$) pro 100 Vol.-% Folgendes umfasst:

(i) - mindestens 95 Vol.-% und höchstens 100 Vol.-% einer Verbindung ($C_5$), ausgewählt aus Verbindungen mit den folgenden Formeln $La_{0,8}Ce_{0,2}Fe_{0,65}Ni_{0,30}Rh_{0,05}O_{3-w}$,  $La_{0,8}Ce_{0,2}Fe_{0,7}Ni_{0,3}O_{3-w}$, $La_{0,8}Sr_{0,2}Fe_{0,65}Ni_{0,30}Rh_{0,05}O_{3-w}$, $La_{0,6}Sr_{0,4}Fe_{0,70}Ni_{0,30}O_{3-w}$ und $La_{0,8}Sr_{0,2}Fe_{0,7}Ni_{0,3}O_{3-w}$,

(ii) - gegebenenfalls bis zu 5 Vol.-% einer Verbindung ($C_6$), die sich von Verbindung ($C_5$) wie oben definiert unterscheidet, und

(iii) - gegebenenfalls bis zu 0,5 Vol.-% einer Verbindung ($C_{5-6}$), die aus mindestens einer chemischen Reaktion hergestellt wird, die durch die folgende Formel dargestellt ist:

$$xF_{C5} + yF_{C6} \rightarrow zF_{C5-6},$$

wobei $F_{C5}$, $F_{C6}$ und $F_{C5-6}$ in dieser Gleichung die jeweiligen rohen Formeln der Verbindungen ($C_5$), ($C_6$) und (C5-6) darstellen und x, y und z rationale Zahlen größer oder gleich 0 darstellen.

6.  Reaktor mit einem inneren Volumen V, das nicht null ist, gedacht zur Herstellung von Synthesegas durch Oxidation von Erdgas, **dadurch gekennzeichnet, dass** er entweder eine organisierte röhrenförmige Anordnung basierend auf überlagernden Schichten von Materialien ähnlicher chemischer Natur nach den Ansprüchen 1 bis 5 umfasst, in denen sich die katalytische Schicht ($C_{C1}$), die die Reaktion der Methan-Oxidation durch gasförmigen Sauerstoff zu Kohlenstoffmonoxid begünstigen kann, auf der äußeren Oberfläche dieser röhrenförmigen Anordnung befindet, die an einem ihrer Enden geschlossen ist, oder eine Kombination von mehreren dieser röhrenförmigen Anordnungen umfasst, die parallel angebracht sind, wobei das freie Volumen $V_f$ im Inneren des Reaktors größer als oder gleich 0,25 V und vorzugsweise größer als oder gleich 0,5 V ist.

**7.** Reaktor nach Anspruch 6, bei dem der Nicht-Null-Anteil des Volumens $V_f$ einen Dampfreformierungskatalysator enthält.

**Revendications**

**1.** Ensemble organisé basé sur des couches superposées de matériaux de nature chimique similaire, **caractérisé en ce qu'**il comprend :

(a) - **une couche dense ($C_{D1}$)**, d'une épaisseur $E_{D1}$, dont la porosité n'excède pas 5 % en volume, ladite couche dense ($C_{D1}$) étant constituée d'un matériau ($A_{D1}$) comprenant, pour 100 % de son volume :

(i) - au moins 75 % en volume et au maximum 100 % en volume d'un composé ($C_1$) choisi parmi les oxydes céramiques dopés qui, à la température d'utilisation comprise entre 600 °C et 1 100 °C, sont sous la forme d'un réseau cristallin avec des vacances d'ions oxydes de la phase pérovskite, de formules :

$$La_{1-x-u}Sr_xAl_uFe_{1-y}Ti_yO_{3-w}, \quad La_{1-x-u}Sr_xCa_uFe_{1-y}Ti_yO_{3-w}, \quad La_{1-x-u}Sr_xBa_uFe_{1-y}Ti_yO_{3-w},$$
$$La_{1-x-u}Sr_xAl_uFe_{1-y}Ga_yO_{3-w}, \; La_{1-x-u}Sr_xCa_uFe_{1-y}Ga_yO_{3-w} \; La_{1-x-u}Sr_xBa_uFe_{1-y}Ga_yO_{3-w} \; La_{1-x}Sr_xFe_{1-y}Ti_yO_{3-w},$$
$$La_{1-x}Sr_xFe_{1-y}Ga_yO_{3-w}, \; La_{1-x-u}Sr_xCa_uFeO_{3-w}, \; La_{1-u}Ca_uFeO_{3-w} \text{ ou } La_{1-x}Sr_xFeO_{3-w},$$

où

- $0 < x \le 0,5$ ;
- $0 < u \le 0,5$ ;
- $(x + u) \le 0,5$ ;
- $0 \le y \le 0,9$ ; et
- w est tel que la structure en question est électriquement neutre ;

et plus particulièrement ceux de formules :

$$La_{0,6}Sr_{0,4}Fe_{0,9}Ga_{0,1}O_{3-w}, \; La_{0,7}Sr_{0,3}Fe_{0,9}Ga_{0,1}O_{3-w}, \; La_{0,8}Sr_{0,2}Fe_{0,7}Ga_{0,3}O_{3-w},$$

$$La_{0,7}Sr_{0,3}Fe_{0,7}Ga_{0,3}O_{3-w}, \text{ ou } La_{0,5}Sr_{0,5}Fe_{0,9}Ti_{0,1}O_{3-w};$$

(ii) - facultativement jusqu'à 25 % en volume d'un composé ($C_2$), qui diffère du composé ($C_1$), choisi parmi l'oxyde de magnésium (MgO), l'oxyde de calcium (CaO), l'oxyde d'aluminium ($Al_2O_3$), l'oxyde de zirconium ($ZrO_2$), l'oxyde de titane ($TiO_2$), les oxydes mixtes de strontium et d'aluminium $SrAl_2O_4$ ou $Sr_3Al_2O_6$, l'oxyde mixte de baryum et de titane ($BaTiO_3$), l'oxyde mixte de calcium et de titane ($CaTiO_3$), $La_{0,5}Sr_{0,5}Fe_{0,9}Ti_{0,1}O_{3-w}$ ou $La_{0,6}Sr_{0,4}Fe_{0,9}Ga_{0,1}O_{3-w}$; et

(iii) - facultativement jusqu'à 2,5 % en volume d'un composé ($C_{1-2}$) produit à partir d'au moins une réaction chimique représentée par l'équation :

$$xF_{C1} + yF_{C2} \rightarrow zF_{C1-2},$$

dans laquelle équation $F_{C1}$, $F_{C2}$ et $F_{C1-2}$ représentent les formules brutes respectives des composés ($C_1$), ($C_2$) et ($C_{1-2}$) et x, y et z représentent des nombres rationnels supérieurs ou égaux à 0 ;

(b) - **une couche poreuse ($C_{P1}$)**, d'une épaisseur $E_{P1}$, dont la porosité volumique est comprise entre 20 % et 80 %, à côté de ladite couche dense ($C_{D1}$), ladite couche poreuse ($C_{P1}$) étant constituée d'un matériau ($A_{P1}$) comprenant, pour 100 % de son volume :

(i) - au moins 75 % en volume et au maximum 100 % en volume d'un composé ($C_3$) choisi parmi les oxydes céramiques dopés qui, à la température d'utilisation comprise entre 600 °C et 1 100 °C, sont sous la forme d'un réseau cristallin avec des vacances d'ions oxydes de la phase pérovskite, de formules :

$La_{1-x}Sr_xFe_{1-y}Ga_yO_{3-w}$, $La_{1-x}Sr_xFe_{1-y}Ti_yO_{3-w}$, $La_{1-x}Sr_xFeO_{3-w}$, $La_{1-x}Ca_uFe_{1-y}Ga_yO_{3-w}$, $La_{1-u}Ca_uFe_{1-y}Ti_yO_{3-w}$, $La_{1-u}Ca_uFeO_{3-w}$, $La_{1-u}Ba_uFe_{1-y}Ga_yO_{3-w}$, $La_{1-u}Ba_uFe_{1-y}Ti_yO_{3-w}$, $La_{1-u}Ba_uFeO_{3-w}$, $La_{1-x-u}Sr_xAl_uFe_{1-y}Ti_yO_{3-w}$, $La_{1-x-u}Sr_xCa_uFe_{1-y}Ti_yO_{3-w}$, $La_{1-x-u}Sr_xBa_uFe_{1-y}Ti_yO_{3-w}$, $La_{1-x-u}Sr_xAl_uFe_{1-y}Ga_yO_{3-w}$, $La_{1-x-u}Sr_xCa_uFe_{1-y}Ga_yO_{3-w}$, $La_{1-x-u}Sr_xBa_uFe_{1-y}Ga_yO_{3-w}$, $La_{1-x}Sr_xFe_{1-y}Ti_yO_{3-w}$, $La_{1-x}Sr_xFe_{1-y}Al_yO_{3-w}$, $La_{1-u}Ca_uFe_{1-y}Ti_yO_{3-w}$, $La_{1-u}Ba_uFe_{1-y}Ti_yO_{3-w}$, $La_{1-x}Sr_xFe_{1-y}Ga_yO_{3-w}$, $La_{1-u}Ca_uFe_{1-y}Ga_yO_{3-w}$, $La_{1-u}Ba_uFe_{1-y}Ga_yO_{3-w}$, $La_{1-u}Ba_uFeO_{3-w}$, $La_{1-u}Ca_uFeO_{3-w}$ ou $La_{1-x}Sr_xFeO_{3-w}$,

où

- $0 < x \leq 0,5$ ;
- $0 < u \leq 0,5$ ;
- $(x + u) \leq 0,5$ ;
- $0 \leq y \leq 0,9$ ; et
- w est tel que la structure en question est électriquement neutre ;

et plus particulièrement ceux de formules :

$La_{0,6}Sr_{0,4}Fe_{0,9}Ga_{0,1}O_{3-w}$, $La_{0,9}Sr_{0,1}Fe_{0,9}Ga_{0,1}O_{3-w}$, $La_{0,7}Sr_{0,3}Fe_{0,7}Al_{0,3}O_{3-w}$, $La_{0,7}Sr_{0,3}Fe_{0,9}Ga_{0,1}O_{3-w}$, $La_{0,8}Sr_{0,2}Fe_{0,7}Ga_{0,3}O_{3-w}$, $La_{0,5}Sr_{0,5}Fe_{0,9}Ti_{0,1}O_{3-w}$, $La_{0,9}Sr_{0,1}Fe_{0,9}Ti_{0,1}O_{3-w}$, $La_{0,6}Sr_{0,4}Fe_{0,2}Co_{0,8}O_{3-w}$, $La_{0,7}Sr_{0,3}FeO_{3-W}$, ou $La_{0,9}Sr_{0,4}Fe_{0,2}Co_{0,8}O_{3-w}$ ;

(ii) - facultativement jusqu'à 25 % en volume d'un composé ($C_4$), qui diffère du composé ($C_3$), choisi parmi l'oxyde de magnésium (MgO), l'oxyde de calcium (CaO), l'oxyde d'aluminium ($Al_2O_3$), l'oxyde de zirconium ($ZrO_2$), l'oxyde de titane ($TiO_2$), les oxydes mixtes de strontium et d'aluminium $SrAl_2O_4$ ou $Sr_3Al_2O_6$, l'oxyde mixte de baryum et de titane ($BaTiO_3$), l'oxyde mixte de calcium et de titane ($CaTiO_3$), $La_{0,5}Sr_{0,5}Fe_{0,9}Ti_{0,1}O_{3-w}$ ou $La_{0,6}Sr_{0,4}Fe_{0,9}Ga_{0,1}O_{3-w}$ ; et

(iii) - facultativement jusqu'à 2,5 % en volume d'un composé ($C_{3-4}$) produit à partir d'au moins une réaction chimique représentée par l'équation :

$$xF_{C3} + yF_{C4} \rightarrow zF_{C3-4},$$

dans laquelle équation $F_{C3}$, $F_{C4}$ et $F_{C3-4}$ représentent les formules brutes respectives des composés ($C_3$), ($C_4$) et ($C_{3-4}$) et x, y et z représentent des nombres rationnels supérieurs ou égaux à 0 ;

**(c) et une couche catalytique ($C_{C1}$)**, capable de promouvoir la réaction d'oxydation partielle du méthane par l'oxygène gazeux en monoxyde de carbone et en hydrogène, ladite couche catalytique ($C_{C1}$), d'une épaisseur $E_{C1}$, ayant une porosité volumique comprise entre 20 % et 80 %, étant adjacente à ladite couche dense ($C_{D1}$) et constituée d'un matériau ($A_{C1}$) comprenant, pour 100 % de son volume :

(i) - au moins 10 % en volume et au maximum 100 % en volume d'un composé ($C_5$) choisi parmi les oxydes céramiques dopés qui, à la température d'utilisation comprise entre 600 °C et 1 100 °C, sont sous la forme d'un réseau cristallin avec des vacances d'ions oxydes de la phase pérovskite, de formule (III), où le composé ($C_5$) est choisi parmi les composés de formules :

$La_{1-x}Ce_xFe_{1-y-v}Ni_yRh_vO_{3-w}$, $La_{1-x}Ce_xFe_{1-y}Ni_yO_3$, $La_{1-x}Sr_xFe_{1-y-v}Ni_yRh_vO_3$ et $La_{1-x}Sr_xFe_{1-y}Ni_yO_{3-w}$,

où

- $0 < x \leq 0,5$ ;
- $0 \leq y \leq 0,9$;
- $0 \leq v < 0,9$ ;
- $0 \leq (y + v) \leq 0,9$ ; et

- w est tel que la structure en question est électriquement neutre ;

et plus particulièrement ceux de formules :

$$La_{0,8}Ce_{0,2}Fe_{0,65}Ni_{0,30}Rh_{0,05}O_{3-w}, \qquad La_{0,8}Ce_{0,2}Fe_{0,7}Ni_{0,3}O_{3-w},$$
$$La_{0,8}Sr_{0,2}Fe_{0,65}Ni_{0,30}Rh_{0,05}O_{3-w}, La_{0,6}Sr_{0,4}Fe_{0,7}Ni_{0,3}O_{3-w} \text{ et } La_{0,8}Sr_{0,2}Fe_{0,7}Ni_{0,3}O_{3-w};$$

(ii) - facultativement jusqu'à 90 % en volume d'un composé ($C_6$), qui diffère du composé ($C_5$), choisi parmi le nickel (Ni), le fer (Fe), le cobalt (Co), le palladium (Pd), le platine (Pt), le rhodium (Rh), le ruthénium (Ru) ou un mélange de ces métaux, facultativement déposé sur un support céramique oxyde ou non-oxyde, dans une quantité comprise entre 0,1 % et 60 % en poids dudit métal ou du mélange de métaux, lesdits supports céramiques étant choisis : <u>soit parmi</u> l'oxyde de bore, l'oxyde d'aluminium, l'oxyde de cérium, l'oxyde de silicium, l'oxyde de titane, l'oxyde de zirconium, l'oxyde de zinc, l'oxyde de magnésium ou l'oxyde de calcium, de préférence parmi l'oxyde de magnésium (MgO), l'oxyde de calcium (CaO), l'oxyde d'aluminium ($Al_2O_3$), l'oxyde de zirconium ($ZrO_2$), l'oxyde de titane ($TiO_2$) ou l'oxyde de cérium ($CeO_2$) ; la mullite ($2SiO_2.3Al_2O_3$), la cordiérite ($Mg_2Al_4Si_5O_{18}$) ou la phase spinelle $MgAl_2O_4$ ; l'oxyde mixte de calcium et de titane ($CaTiO_3$) ou l'oxyde mixte de calcium et d'aluminium ($CaAl_{12}O_{19}$), l'hydroxyapatite $Ca_{10}(PO_4)_6(OH)_2$ ou le phosphate tricalcique $Ca_3(PO_4)_2$; $La_{0,5}Sr_{0,5}Fe_{0,9}Ti_{0,1}O_{3-\square}$, $La_{0,6}Sr_{0,4}Fe_{0,9}Ga_{0,1}O_{3-\square}$, $La_{0,5}Sr_{0,5}Fe_{0,9}Ga_{0,1}O_{3-\square}$ ou $La_{0,6}Sr_{0,4}Fe_{0,9}Ti_{0,1}O_{3-\square}$ ; <u>soit parmi</u> les matériaux du type non-oxyde, de préférence choisis parmi le carbure de silicium (SiC), le nitrure de bore (BN), le nitrure d'aluminium (AlN) ou le nitrure de silicium ($Si_3N_4$), les sialons (SiAlON) ;

(iii) - facultativement jusqu'à 2,5 % en volume d'un composé ($C_{5-6}$) produit à partir d'au moins une réaction chimique représentée par l'équation :

$$xF_{C5} + yF_{C6} \rightarrow zF_{C5-6},$$

dans laquelle équation $F_{C5}$, $F_{C6}$ et $F_{C5-6}$ représentent les formules brutes respectives des composés ($C_5$), ($C_6$) et ($C_{5-6}$) et x, y et z représentent des nombres rationnels supérieurs ou égaux à 0 ;

de façon à constituer un ensemble $E_1$ constitué de trois couches successives {($C_{C1}$), ($C_{D1}$), ($C_{P1}$)} où :

- au moins l'un des éléments chimiques actuellement présents dans le composé ($C_1$) est différent d'un des éléments chimiques actuellement présents dans le composé ($C_3$).

2. Ensemble organisé basé sur des couches superposées de matériaux de nature chimique similaire, selon la revendication 1, dans lequel les proportions en volume des composés ($C_{1-2}$), ($C_{3-4}$) et ($C_{5-6}$) facultativement présents dans les matériaux ($A_{D1}$), ($A_{P1}$) et ($A_{C1}$), respectivement, tendent vers 0.

3. Ensemble organisé basé sur des couches superposées de matériaux de nature chimique similaire, selon l'une des revendications 1 et 2, dans lequel les proportions en volume des composés ($C_2$), ($C_4$) et ($C_6$) facultativement présents dans les matériaux ($A_{D1}$), ($A_{P1}$) et ($A_{C1}$), sont supérieures ou égales à 0,1 % et inférieures ou égales à 10%.

4. Ensemble organisé basé sur des couches superposées de matériaux de nature chimique similaire, selon l'une des revendications 1 à 3, **caractérisé en ce qu'**il comprend :

(a) - **une couche dense ($C'_{D1}$)** correspondant à la couche ($C_{D1}$) définie ci-dessus et pour laquelle le matériau ($A_{D1}$) comprend, pour 100 % de son volume :

(i) - au moins 95 % en volume et au maximum 100 % en volume d'un composé ($C_1$) choisi parmi les composés de formules :

$$La_{1-x-u}Sr_xAl_uFe_{1-y}Ti_yO_{3-w}, \quad La_{1-x-u}Sr_xBa_uFe_{1-y}Ti_yO_{3-w}, \quad La_{1-x-u}Sr_xBa_uFe_{1-y}Ti_yO_{3-w},$$
$$La_{1-x-u}Sr_xAl_uFe_{1-y}Ga_yO_{3-w}, La_{1-x-u}Sr_xCa_uFe_{1-y}Ga_yO_{3-w}, La_{1-x-u}Sr_xBa_uFe_{1-y}Ga_yO_{3-w}, La_{1-x}Sr_xFe_{1-y}Ti_yO_{3-w},$$
$$La_{1-x}Sr_xFe_{1-y}Ga_yO_{3-w}, La_{1-x-u}Sr_xCa_uFeO_{3-w}, La_{1-u}Ca_uFeO_{3-w} \text{ ou } La_{1-x}Sr_xFeO_{3-w},$$

où

- $0 < x \leq 0,5$ ;
- $0 < u \leq 0,5$ ;
- $(x + u) \leq 0,5$ ;
- $0 \leq y \leq 0,9$ ; et
- w est tel que la structure en question est électriquement neutre ;

(ii) - facultativement jusqu'à 5 % en volume d'un composé $(C_2)$, qui diffère du composé $(C_1)$, tel que défini ci-dessus ; et

(iii) - facultativement jusqu'à 0,5 % en volume d'un composé $(C_{1-2})$ produit à partir d'au moins une réaction chimique représentée par l'équation :

$$xF_{C1} + yF_{C2} \rightarrow zF_{C1\text{-}2},$$

dans laquelle équation $F_{C1}$, $F_{C2}$ et $F_{C1\text{-}2}$ représentent les formules brutes respectives des composés $(C_1)$, $(C_2)$ et $(C_{1-2})$ et x, y et z représentent des nombres rationnels supérieurs ou égaux à 0 ;

**(b) - une couche poreuse $(C'_{P1})$** correspondant à la couche $(C_{P1})$ définie ci-dessus, pour laquelle le matériau $(A_{P1})$ comprend, pour 100 % de son volume :

(i) - au moins 95 % en volume et au maximum 100 % en volume d'un composé $(C_3)$ choisi parmi les composés de formules :

$La_{1-x}Sr_xFe_{1-y}Ga_yO_{3-w}$, $La_{1-x}Sr_xFe_{1-y}Ti_yO_{3-w}$, $La_{1-x}Sr_xFeO_{3-w}$, $La_{1-u}Ca_uFe_{1-y}Ga_yO_{3-w}$, $La_{1-u}Ca_uFe_{1-y}Ti_yO_{3-w}$, $La_{1-u}Ca_uFeO_{3-w}$, $La_{1-u}Ba_uFe_{1-y}Ga_yO_{3-w}$, $La_{1-u}Ba_uFe_{1-y}Ti_yO_{3-w}$, $La_{1-u}Ba_uFeO_{3-w}$, $La_{1-x-u}Sr_xAl_uFe_{1-y}Ti_yO_{3-w}$, , $La_{1-x-u}Sr_xCa_uFe_{1-y}Ti_yO_{3-w}$, $La_{1-x-u}Sr_xBa_uFe_{1-y}Ti_yO_{3-w}$, $La_{1-x-u}Sr_xAl_uFe_{1-y}Ga_yO_{3-w}$, $La_{1-x-u}Sr_xCa_uFe_{1-y}Ga_yO_{3-w}$ ou $La_{1-x-u}Sr_xBa_uFe_{1-y}Ga_yO_{3-w}$,

où

- $0 < x \leq 0,5$ ;
- $0 < u \leq 0,5$ ;
- $(x + u) \leq 0,5$ ;
- $0 \leq y \leq 0,9$ ;

et

- w est tel que la structure en question est électriquement neutre ;

(ii) - facultativement jusqu'à 5 % en volume d'un composé $(C_4)$, qui diffère du composé $(C_3)$, tel que défini ci-dessus ; et

(iii) - facultativement jusqu'à 0,5 % en volume d'un composé $(C_{3-4})$ produit à partir d'au moins une réaction chimique représentée par l'équation :

$$xF_{C3} + yF_{C4} \rightarrow zF_{C3\text{-}4},$$

dans laquelle équation $F_{C3}$, $F_{C4}$ et $F_{C3\text{-}4}$ représentent les formules brutes respectives des composés $(C_3)$, $(C_4)$ et $(C_{3-4})$ et x, y et z représentent des nombres rationnels supérieurs ou égaux à 0 ;

**(c) - et une couche catalytique $(C'_{C1})$** correspondant à la couche $(C_{C1})$ définie ci-dessus, pour laquelle le matériau $(A_{C1})$ comprend, pour 100 % de son volume :

(i) - au moins 95 % en volume et au maximum 100 % en volume d'un composé $(C_5)$ choisi parmi les composés de formules :

$La_{1-x}Ce_xFe_{1-y-v}Ni_yRh_vO_{3-w}$, $La_{1-x}Ce_xFe_{1-y}Ni_yO_{3-w}$, $La_{1-x}Sr_xFe_{1-y-v}Ni_yRh_vO_{3-w}$, $La_{0,6}Sr_{0,4}Fe_{0,70}Ni_{0,30}O_{3-w}$ et $La_{1-x}Sr_xFe_{1-y}Ni_yO_{3-w}$,

où

- $0 < x \leq 0,5$ ;
- $0 \leq y \leq 0,7$ ;
- $0 \leq v \leq 0,5$ ;
- $0 \leq (y + v) \leq 0,8$ ; et
- w est tel que la structure en question est électriquement neutre ;

(ii) - facultativement jusqu'à 5 % en volume d'un composé $(C_6)$, qui diffère du composé $(C_5)$, tel que défini ci-dessus ; et
(iii) - facultativement jusqu'à 0,5 % en volume d'un composé $(C_{5-6})$ produit à partir d'au moins une réaction chimique représentée par l'équation :

$$xF_{C5} + yF_{C6} \rightarrow zF_{C5-6},$$

dans laquelle équation $F_{C5}$, $F_{C6}$ et $F_{C5-6}$ représentent les formules brutes respectives des composés $(C_5)$, $(C_6)$ et $(C_{5-6})$ et x, y et z représentent des nombres rationnels supérieurs ou égaux à 0.

5. Ensemble organisé basé sur des couches superposées de matériaux de nature chimique similaire, selon la revendication 4, **caractérisé en ce qu'**il comprend :

**(a) - une couche dense $(C''_{D1})$** correspondant à la couche $(C'_{D1})$ définie ci-dessus et pour laquelle le matériau $(A_{D1})$ comprend, pour 100 % de son volume :

(i) - au moins 95 % en volume et au maximum 100 % en volume d'un composé $(C_1)$ choisi parmi les composés de formules :

$La_{0,6}Sr_{0,4}Fe_{0,9}Ga_{0,1}0_{3-w}$, $La_{0,7}Sr_{0,3}Fe_{0,9}Ga_{0,1}O_{3-w}$, $La_{0,8}Sr_{0,2}Fe_{0,7}Ga_{0,3}O_{3-w}$, $La_{0,7}Sr_{0,3}Fe_{0,7}Ga_{0,3}O_{3-w}$ ou $La_{0,5}Sr_{0,5}Fe_{0,9}Ti_{0,1}O_{3-w}$ ;

(ii) - facultativement jusqu'à 5 % en volume d'un composé $(C_2)$, qui diffère du composé $(C_1)$, tel que défini ci-dessus ; et
(iii) - facultativement jusqu'à 0,5 % en volume d'un composé $(C_{1-2})$ produit à partir d'au moins une réaction chimique représentée par l'équation :

$$xF_{C1} + yF_{C2} \rightarrow zF_{C1-2},$$

dans laquelle équation $F_{C1}$, $F_{C2}$ et $F_{C1-2}$ représentent les formules brutes respectives des composés $(C_1)$, $(C_2)$ et $(C_{1-2})$ et x, y et z représentent des nombres rationnels supérieurs ou égaux à 0 ;

(b) - une couche poreuse $(C''_{P1})$ correspondant à la couche $(C'_{P1})$ définie ci-dessus, pour laquelle le matériau $(A_{P1})$ comprend, pour 100 % de son volume :

(i) - au moins 95 % en volume et au maximum 100 % en volume d'un composé $(C_3)$ choisi parmi les composés de formules :

$La_{0,6}Sr_{0,4}Fe_{0,9}Ga_{0,1}O_{3-w}$, $La_{0,9}Sr_{0,1}Fe_{0,9}Ga_{0,1}O_{3-w}$, $La_{0,5}Sr_{0,5}Fe_{0,9}Ti_{0,1}O_{3-w}$, $La_{0,9}Sr_{0,1}Fe_{0,9}Ti_{0,1}O_{3-w}$, $La_{0,6}Sr_{0,4}Fe_{0,2}Co_{0,8}O_{3-w}$, $La_{0,9}Sr_{0,1}Fe_{0,2}Co_{0,8}O_{3-w}$, $La_{0,7}Sr_{0,3}Fe_{0,9}Ga_{0,1}O_{3-w}$, $La_{0,8}Sr_{0,2}Fe_{0,7}Ga_{0,3}O_{3-w}$ ou $La_{0,7}Sr_{0,3}Fe_{0,7}Ga_{0,3}O_{3-w}$ ;

(ii) - facultativement jusqu'à 5 % en volume d'un composé $(C_4)$, qui diffère du composé $(C_3)$, tel que défini

ci-dessus ; et
(iii) - facultativement jusqu'à 0,5 % en volume d'un composé ($C_{3-4}$) produit à partir d'au moins une réaction chimique représentée par l'équation :

$$x F_{C3} + y F_{C4} \rightarrow z F_{C3\text{-}4},$$

dans laquelle équation $F_{C3}$, $F_{C4}$ et $F_{C3-4}$ représentent les formules brutes respectives des composés ($C_3$), ($C_4$) et ($C_{3-4}$) et x, y et z représentent des nombres rationnels supérieurs ou égaux à 0 ;

**(c) - et une couche catalytique (C"$_{C1}$)** correspondant à la couche (C'$_{C1}$) définie ci-dessus, pour laquelle le matériau ($A_{C1}$) comprend, pour 100 % de son volume :

(i) - au moins 95 % en volume et au maximum 100 % en volume d'un composé ($C_5$) choisi parmi les composés de formules :

$La_{0,8}Ce_{0,2}Fe_{0,65}Ni_{0,30}h_{0,05}O_{3-w}$,                    $La_{0,8}Ce_{0,2}Fe_{0,7}Ni_{0,3}O_{3-w}$,
$La_{0,8}Sr_{0,2}Fe_{0,65}Ni_{0,30}Rh_{0,05}O_{3-w}$, $La_{0,6}Sr_{0,4}Fe_{0,70}Ni_{0,30}O_{3-w}$ et $La_{0,8}Sr_{0,2}Fe_{0,7}Ni_{0,3}O_{3-w}$ ;

(ii) - facultativement jusqu'à 5 % en volume d'un composé ($C_6$), qui diffère du composé ($C_5$), tel que défini ci-dessus ; et
(iii) - facultativement jusqu'à 0,5 % en volume d'un composé ($C_{5-6}$) produit à partir d'au moins une réaction chimique représentée par l'équation :

$$x F_{C5} + y F_{C6} \rightarrow z F_{C5\text{-}6},$$

dans laquelle équation $F_{C5}$, $F_{C6}$ et $F_{C5-6}$ représentent les formules brutes respectives des composés ($C_5$), ($C_6$) et ($C_{5-6}$) et x, y et z représentent des nombres rationnels supérieurs ou égaux à 0.

6. Réacteur de volume interne V non nul, destiné à la production de gaz de synthèse par oxydation de gaz naturel, **caractérisé en ce qu'**il comprend soit un ensemble organisé de forme tubulaire, basé sur des couches superposées de matériaux de nature chimique similaire, selon l'une des revendications 1 à 5, dans lequel la couche catalytique ($C_{C1}$), capable de promouvoir la réaction d'oxydation du méthane par l'oxygène gazeuse en monoxyde de carbone, est située sur la surface externe dudit ensemble de forme tubulaire fermé à l'une de ses extrémités, soit une combinaison de plusieurs desdits ensembles de forme tubulaire qui sont montés en parallèle, dans lesquels le volume libre $V_f$ à l'intérieur du réacteur est supérieur ou égal à 0,25V et est de préférence supérieur ou égal à 0,5V.

7. Réacteur selon la revendication 6, dans lequel une fraction non nulle du volume $V_f$ contient un catalyseur de vaporeformage.

Fig. 1A

Fig. 1B

Fig. 1C

Fig. 1D

**Fig. 1E**

**Fig. 1F**

**Fig. 1G**

**Fig. 1H**

**Fig. 1I**

$La_{1-x} Sr_x Fe_{1-y-v} Mb_y Mb'_v O_{3-w}$

**Fig. 1J**

$La_{1-x} Sr_x Fe_{1-y} Mb_y O_{3-w}$

**Fig. 1K**

| | |
|---|---|
| CATALYST LAYER | CC1 |
| DENSE LAYER | CD1 |
| SUPPORT LAYER WITH DISCRETE POROSITY GRADIENT | CP1 |

Fig. 2A

Fig. 2B

**Fig. 3**

**Fig. 4**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6214757 B
- US 5911860 A
- US 6165431 A
- US 5648304 A
- US 4791079 A
- US 4827071 A
- US 5240480 A
- US 6368383 B
- EP 1452505 A1
- US 5391440 A
- US 6638575 B

- US 5439706 A
- US 5683797 A
- US 5534471 A
- US 5569633 A
- US 5938822 A
- US 6514314 B
- US 6565632 B
- WO 0246122 A
- WO 0300439 A
- FR 0405124
- FR 0350234

**Non-patent literature cited in the description**

- **TERAOKA et al.** *Mat. Res. Bull.,* 1988, vol. 23, 51-58

- **GELLINGS ; BOUWMEESTER.** *Catal. Today,* 1992, vol. 12, 1-105